(19) Europäisches Patentamt / European Patent Office / Office européen des brevets

(11) **EP 4 770 109 A1**

(12) **EUROPEAN PATENT APPLICATION**
published in accordance with Art. 153(4) EPC

(43) Date of publication:
**01.07.2026 Bulletin 2026/27**

(21) Application number: **24895753.2**

(22) Date of filing: **13.08.2024**

(51) International Patent Classification (IPC):
**H04N 23/62** (2023.01)     **H04N 5/00** (2011.01)

(52) Cooperative Patent Classification (CPC):
**G06T 7/80; H04N 5/00; H04N 23/62; H04N 23/63; H04N 23/67; H04N 23/73; H04N 23/75**

(86) International application number:
**PCT/CN2024/111827**

(87) International publication number:
**WO 2025/112650 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.11.2023 CN 202311637550**

(71) Applicant: **Honor Device Co., Ltd.**
**Shenzhen, Guangdong 518040 (CN)**

(72) Inventor: **LI, Xiaoqin**
**Shenzhen, Guangdong 518040 (CN)**

(74) Representative: **Gill Jennings & Every LLP**
**The Broadgate Tower**
**20 Primrose Street**
**London EC2A 2ES (GB)**

(54) **PHOTOGRAPHING METHOD AND ELECTRONIC DEVICE**

(57) A shooting method and an electronic device are provided and applied to the field of terminal technologies. The method includes: starting a camera sensor at a first moment; obtaining an exposure parameter and an aperture parameter of an $N^{th}$ frame at a second moment; delivering the exposure parameter to the camera sensor at a third moment; adjusting an aperture based on the aperture parameter at a fourth moment by an aperture component; and delivering first calibration data to the camera sensor at a fifth moment. In embodiments of this application, delivery of the calibration data after the camera sensor starts flowing is supported, which improves image output quality and helps enhance shooting experience of a user.

FIG. 2B

**Description**

This application claims priority to Chinese Patent Application No. 202311637550.X, filed with the China National Intellectual Property Administration on November 30, 2023 and entitled "SHOOTING METHOD AND ELECTRONIC DEVICE", which is incorporated herein by reference in its entirety.

**TECHNICAL FIELD**

This application relates to the field of image processing technologies, and specifically, to a shooting method and an electronic device.

**BACKGROUND**

With the increasing development of smart terminals, a shooting function has become an essential function of a smart terminal. Requirements and experience of users on shooting (photographing and/or video recording) of smart terminals are also continuously enhanced. When a smart terminal is used for shooting, a degree of background blur or a blurring effect is controlled by adjusting an aperture of a camera. The aperture is a device for controlling an amount of light intake. Generally, a larger aperture indicates a shallower depth of field and therefore a more significant image blurring effect; and a smaller aperture indicates a smaller amount of light intake and a deeper depth of field and therefore a weaker image blurring effect.

To achieve a better image effect, the smart terminal corrects image data of a camera sensor (sensor) by using calibration data preset in a register. However, for a smart terminal having a variable aperture, this manner is not effective and affects the image effect.

**SUMMARY**

In view of this, this application provides a shooting method, an electronic device, a computer-readable storage medium, and a computer program product, which can switch calibration data after an aperture changes, enhance an image effect, and help improve shooting experience of a user.

According to a first aspect, a shooting method is provided. The method is applied to an electronic device, and the method includes:

starting a camera sensor at a first moment;

obtaining an exposure parameter and an aperture parameter of an $N^{th}$ frame at a second moment, where the first moment is before the second moment;

delivering the exposure parameter to the camera sensor at a third moment, where the third moment is a moment corresponding to a start-of-frame SOF delimiter of the $N^{th}$ frame, and the second moment is before the third moment;

adjusting an aperture based on the aperture parameter at a fourth moment by an aperture component, where the fourth moment is a moment corresponding to an end-of-frame EOF delimiter of an $(N+1)^{th}$ frame; and

delivering first calibration data to the camera sensor at a fifth moment, where the fifth moment is a moment corresponding to a SOF of an $(N+2)^{th}$ frame.

The foregoing method may be performed by an electronic device or a chip in the electronic device. Based on the foregoing solution, the electronic device starts the camera sensor at the first moment, adjusts the aperture based on the aperture parameter after receiving the aperture parameter, and delivers the first calibration data to the camera sensor after starting to adjust the aperture. Compared with a manner in which a set of calibration data is burned before the camera sensor starts flowing, in embodiments of this application, delivery of the calibration data after the camera sensor starts flowing is supported, which improves image output quality and helps enhance shooting experience of the user.

In a possible implementation, the electronic device includes a plurality of apertures, and the plurality of apertures include at least the first aperture. In other words, embodiments of this application are applied to an electronic device having a variable aperture.

Embodiments of this application are applied to a scene in which the camera sensor (sensor) uses Quad bayer coding (Quad bayer coding, QBC) to output an image, or are applicable to a Quad sensor. A pixel arrangement manner of image data outputted by the Quad sensor is different from a pixel arrangement manner of image data outputted by a traditional sensor. For the image data outputted by the Quad sensor, there is a brightness difference (or a light sensitivity difference) between sub-pixels of a same color. Therefore, Quad bayer coding sensitivity correction (Quad bayer coding sensitivity correction, QSC) calibration needs to be performed. This is because if QSC correction (or QSC calibration) is not performed, the image data outputted by the Quad sensor has a problem of brightness non-uniformity, leading to a poor image effect of an outputted image.

It may be understood that embodiments of this application are applicable to a scene in which the user uses the electronic device to take photos or record videos.

In a possible implementation, the electronic device starts the camera sensor in response to a first operation performed by a user.

Optionally, the first operation is an operation of opening a camera application program. The electronic device is installed with the camera application.

A specific content of the first operation is not limited in embodiments of this application. The first operation may be understood as an operation of opening the camera application by using any manner. The first operation includes, but is not limited to, any form of the following: a voice command, a physical button, a UI interaction operation, and the like.

For example, the first operation is an operation performed by the user to tap the camera application in an interface of the electronic device.

In a possible implementation, the aperture parameter is configured for instructing the camera sensor to switch from a current aperture to the first aperture.

The foregoing exposure parameter and the foregoing aperture parameter are obtained from a parameter delivered by an automatic exposure module. It should be noted that whether a timing of obtaining the exposure parameter and a timing of obtaining the aperture parameter are a same timing or an order of obtaining the two parameters is not limited in embodiments of this application. For example, after the parameter is adjusted, the exposure parameter and the aperture parameter may be obtained simultaneously. For another example, after the parameter is adjusted, the exposure parameter may be obtained first, and the aperture parameter corresponding to the exposure parameter may be obtained later. For another example, after the parameter is adjusted, the aperture parameter may be obtained first, and the exposure parameter corresponding to the aperture parameter may be obtained later.

In a possible implementation, the obtaining an exposure parameter and an aperture parameter of an $N^{th}$ frame at a second moment includes:

obtaining the exposure parameter and the aperture parameter in response to a second operation.

The foregoing exposure parameter and the foregoing aperture parameter may be obtained in response to the second operation. A specific form of the second operation is not limited in embodiments of this application. The second operation may be understood as an operation of triggering the aperture of the electronic device to switch.

Optionally, the second operation is an operation performed by the user to manually adjust the aperture, or the second operation is an operation performed by the electronic device to automatically adjust the aperture.

In other words, at the second moment, the electronic device may obtain the exposure parameter and the aperture parameter in response to the operation performed by the user to manually adjust the aperture. For example, the second operation is the operation performed by the user to manually adjust the aperture in a professional shooting mode. For another example, the second operation is an operation performed after the user switches a current normal photographing mode to a large aperture shooting mode.

Alternatively, at the second moment, the electronic device may obtain the exposure parameter and the aperture parameter based on the operation of automatically adjusting the aperture. For example, the electronic device is equipped with a variable aperture, after detecting a specific shooting scene, the electronic device automatically adjusts the variable aperture, and in this case, the electronic device obtains the exposure parameter and the aperture parameter.

In a possible implementation, based on the exposure parameter, the aperture parameter, and the first calibration data, an image corresponding to an $(N+3)^{th}$ frame is displayed within a display duration corresponding to the $(N+3)^{th}$ frame. In other words, after the calibration data is delivered, the exposure parameter and the aperture parameter of the image that is of the $(N+3)^{th}$ frame and that is transmitted for display match. Since the aperture has been switched to the first aperture and the delivered first QSC calibration data has already taken effect, an obtained image effect corresponding to the $(N+3)^{th}$ frame is better than an image effect obtained by using QSC calibration data corresponding to an original aperture. That is, compared with compensation by using the QSC calibration data of the original aperture (that is, the aperture before switching), compensation by using the QSC calibration data corresponding to the switched first aperture yields higher image quality.

In a possible implementation, the first calibration data is calibration data corresponding to the first aperture. For example, when the camera sensor is the Quad sensor, the first calibration data corresponding to the first aperture is QSC calibration data. In this way, after the first aperture is switched to, the image data outputted by the Quad sensor can be compensated and image quality can be improved by using the QSC calibration data corresponding to the first aperture.

In a possible implementation, the aperture parameter is configured for instructing the camera sensor to switch from a current aperture to the first aperture. By using the aperture parameter, the aperture component switches the current aperture to an aperture corresponding to the aperture parameter, for example, the first aperture, to switch the aperture.

Because delivery of the first calibration data requires a transmission duration, to minimize impact on the image frame during delivery of the calibration data, in embodiments of this application, the calibration data may be preprocessed in advance, that is, the delivered first calibration data is preprocessed calibration data. The preprocessed calibration data has a reduced quantity of bits for a corresponding data volume, so that the transmission duration is reduced.

In a possible implementation, the first calibration data is calibration data obtained by preprocessing second calibration data, where a quantity of bits corresponding to the second calibration data is greater than a quantity of bits corresponding to the first calibration data.

A specific preprocessing manner is not limited in embodiments of this application. In a possible implementation, since a partial image region is used for cropping in a high zoom ratio shooting scene, the QSC calibration data is cropped in the corresponding region. This reduces the data volume of the QSC calibration data while ensuring a data compensation effect, and lowers a quantity of affected image frames.

In a possible implementation, a transmission duration of the first calibration data is less than a frame interval between the $(N+2)^{th}$ frame and the $(N+3)^{th}$ frame.

In a possible implementation, the method further includes:

displaying an image corresponding to the $(N+1)^{th}$ frame within a display duration corresponding to the $(N+2)^{th}$ frame.

When a process of delivering the first calibration data affects the $(N+2)^{th}$ frame image, image brightness of the $(N+2)^{th}$ frame is abnormal and the $(N+2)^{th}$ frame image does not undergo QSC compensation. Therefore, the $(N+2)^{th}$ frame image needs to be discarded when transmitted for display. In this case, the image corresponding to the $(N+1)^{th}$ frame may be displayed to minimize the impact caused by not displaying the $(N+2)^{th}$ frame image as much as possible.

In a possible implementation, the starting a camera sensor includes:

starting the camera sensor in response to receiving the first operation performed by the user, where the first operation is configured for turning on the camera.

Embodiments of this application are applicable to a preview scene with a high zoom ratio (including a photo preview or a video preview) and a shooting scene in which a shooting environment is a high-illuminance environment.

In a possible implementation, after the starting a camera sensor, the method further includes:

displaying a first preview interface, where the first preview interface includes a zoom ratio option; and

adopting, by the camera sensor, a full size crop image output mode in response to an operation performed by a user to adjust a zoom ratio to a first zoom ratio based on the zoom ratio option and in response to detecting that a current shooting environment is a high-illuminance environment, where

the first preview interface is a photo preview interface or a video preview interface; the first zoom ratio is greater than a preset zoom ratio; and the high-illuminance environment includes that an ambient illuminance of the current shooting environment is greater than a first illuminance threshold.

Embodiments of this application are applicable to a preview scene with a high zoom ratio (including a photo preview or a video preview) and a shooting scene in which a shooting environment is a high-dynamic environment.

In a possible implementation, after the starting a camera sensor, the method further includes:

displaying a second preview interface, where the second preview interface includes a zoom ratio option; and

adopting, by the camera sensor, a full size crop image output mode in response to an operation performed by a user to adjust a zoom ratio to a second zoom ratio based on the zoom ratio option and in response to detecting that a current shooting environment is a high-dynamic environment, where

the second preview interface is a photo preview interface or a video preview interface; the second zoom ratio is greater than a preset zoom ratio; and the high-dynamic environment includes that a dynamic range value satisfies a dynamic range DR constraint condition.

It should be noted that in the foregoing various shooting scenes, the sensor uses a full size crop (full size crop) image output mode. Therefore, if the aperture changes in these scenes, QSC calibration needs to be performed to enhance image quality.

According to a second aspect, an electronic device is provided, and includes a unit configured to perform any method in the first aspect. The electronic device may be a terminal or may be a chip in the terminal. The electronic device includes a communication unit, a display unit, and a processing unit.

When the electronic device is a terminal, the processing unit may be a processor, the communication unit may be a communication interface, and the display unit may be a graphics processing module and a screen. The terminal may further include a memory, where the memory is configured to store computer program code, and when the processor executes the computer program code stored in the memory, the terminal is enabled to perform any method in the first aspect.

When the electronic device is a chip in a terminal, the processing unit may be a logical processing unit in the chip, the input unit may be an output interface, a pin, a circuit, or the like, and the display unit may be a graphics processing unit in the chip. The chip may further include a memory, where the memory may be a memory (for example, a register or a buffer) in the chip, or may be a memory (for example, a read-only memory or a random access memory) located outside the chip.

The memory is configured to store computer program code, and when the processor executes the computer program code stored in the memory, the chip is enabled to perform any method in the first aspect.

According to a third aspect, a computer-readable storage medium is provided. The computer-readable storage medium stores computer program code. When the computer program code is run by an electronic device, the electronic device is enabled to perform the method in any implementation of the first aspect.

According to a fourth aspect, a computer program product is provided, including computer program code, the computer program code, when run by an electronic device, causing the electronic device to perform any method in the first aspect.

## BRIEF DESCRIPTION OF DRAWINGS

FIG. 1A is an example diagram of an application scene according to an embodiment of this application;
FIG. 1B is another example diagram of an application scene according to an embodiment of this application;
FIG. 2A is a schematic diagram of a pixel point array distribution of QBC;
FIG 2B is a schematic comparison diagram before and after QSC correction;
FIG. 3 is a schematic diagram of a software architecture applied to an embodiment of this application;
FIG. 4 is a time sequence interaction diagram applied to the software architecture in FIG. 3.
FIG. 5 is a time sequence example diagram of delivering QSC calibration data according to an embodiment of this application;
FIG. 6 is a schematic preprocessing comparison diagram of QSC calibration data;
FIG. 7 is a schematic flowchart of a shooting method according to an embodiment of this application;
FIG. 8A is an example interface diagram of a user adjusting an aperture according to an embodiment of this application;
FIG. 8B is another example interface diagram of a user adjusting an aperture according to an embodiment of this application;
FIG. 9 is a schematic structural diagram of an electronic device applicable to this application; and
FIG. 10 is a schematic block diagram of a shooting device according to an embodiment of this application.

## DESCRIPTION OF EMBODIMENTS

The following describes technical solutions in embodiments of this application with reference to accompanying drawings.

In embodiments of this application, unless otherwise specified, "a plurality of" may mean two or more.

Embodiments of this application are applicable to an electronic device. The electronic device may be a mobile phone, a smart screen, a tablet computer, a wearable electronic device, an in-vehicle electronic device, an augmented reality (augmented reality, AR) device, a virtual reality (virtual reality, VR) device, a notebook computer, an ultra-mobile personal computer (ultra-mobile personal computer, UMPC), a netbook, a personal digital assistant (personal digital assistant, PDA), a projector, or the like.

Embodiments of this application are applicable to an electronic device including a camera sensor (sensor) and a plurality of apertures. The plurality of apertures may have different characteristics. By setting the plurality of apertures, different apertures correspond to different amounts of light entering a device body. In this way, when the electronic device switches to different apertures, different depth-of-field effects or blurring effect in photographing may be obtained based on different amounts of light intake. In other words, compared to an electronic device that has a single aperture and that cannot adjust an amount of light intake, an advantage of the electronic device having the plurality of apertures is that the amount of light intake can be dynamically adjusted and the depth-of-field effect is optimized. Further, an electronic device having a fixed aperture can adjust an aperture parameter, but the aperture parameter is simulated through an algorithm in the electronic device. This manner is less effective than a manner of adjusting a physical aperture (that is, switching different apertures). The following describes the advantages of setting a plurality of apertures for the electronic device with reference to different scenes.

In some embodiments, during shooting, the electronic device may select an appropriate aperture based on a distance to a target shot object, thereby ensuring the blurring effect in photographing. Different depths of field may affect a blurring effect of an image background, resulting in different blurring effects of an image.

In some embodiments, in a low-illuminance shooting environment (for example, a night scene), the electronic device may ensure the amount of light intake by switching to a large aperture, thereby presenting a better preview effect in a night shooting scene, making a preview image of the target shot object clearer.

It is collectively described herein that a low-illuminance environment may be understood as a dark environment.

The low-illuminance environment includes that an ambient illuminance of the shooting environment is less than a preset brightness threshold. Correspondingly, a high-illuminance environment includes that the ambient illuminance of the shooting environment is greater than or equal to the preset brightness threshold. The high-illuminance environment may also be understood as a high-brightness environment.

The ambient illuminance is light intensity of a shooting environment when a user performs shooting. A value of the ambient illuminance may be represented by using the following indicators: a lighting value (lighting value, LV), illuminance (lux), a illuminance index value (luxindex), or the like.

The LV is configured for estimating ambient brightness, and a specific calculation formula thereof is as below:

$$LV = 10 * \log_2 \left( \frac{Aperture^2}{Exposure} * \frac{100}{Iso} * \frac{Luma}{46} \right)$$

Exposure is exposure time, Aperture is an aperture size, Iso is sensitivity, and Luma is an average value of Y of an image in an XYZ color space.

For example, the ambient illuminance is represented by using the LV, and correspondingly, the brightness threshold is an LV threshold. When the ambient illuminance of the shooting environment is greater than the LV threshold, the current shooting environment is a high-illuminance environment.

Optionally, in some implementations, the current ambient illuminance of the shooting environment may be obtained through an ambient light sensor, and based on the obtained ambient illuminance, it may be determined whether the current environment is a high-illuminance environment.

In some embodiments, in a professional shooting mode, the electronic device correspondingly adjusts the aperture parameter in response to an operation performed by a user to manually adjust the aperture parameter, thereby providing the user with richer shooting experience.

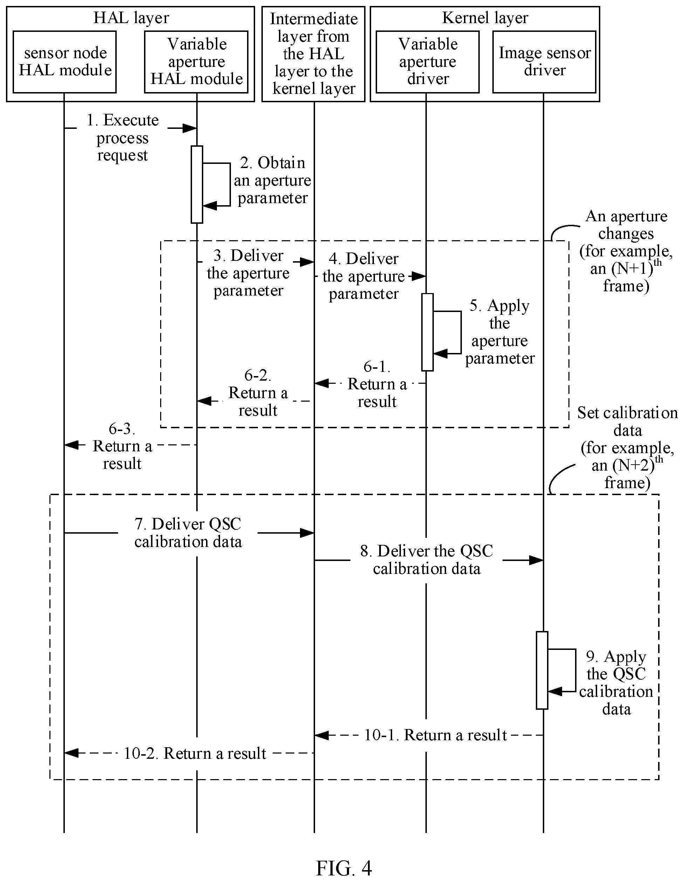

Optionally, an aperture component of the electronic device includes at least a first aperture and a second aperture, and an amount of light intake corresponding to the first aperture is different from an amount of light intake corresponding to the second aperture. For example, the first aperture is a large aperture, and the second aperture is a small aperture; and the amount of light intake corresponding to the first aperture is greater than the amount of light intake corresponding to the second aperture. In embodiments of this application, each aperture has corresponding calibration data. For example, the first aperture corresponds to first calibration data, and the second aperture corresponds to second calibration data. A meaning of the calibration data is introduced in FIG. 4.

The foregoing describes different scenes of the electronic device equipped with the plurality of apertures. The following describes different shooting scenes applicable to embodiments of this application.

In some embodiments, in a photo preview mode, for a shooting scene with a zoom ratio greater than 2x (for example, 3x) in a high-illuminance environment, the sensor uses a full size (full size) crop (crop) mode for outputting an image.

In some other embodiments, in the photo preview mode, for a shooting scene with a zoom ratio greater than 2x (for example, 3x) in a high-dynamic range, the sensor uses a full size (full size) stagger (stagger) mode for outputting an image. For an image output manner in full size crop and stagger modes, reference may be made to descriptions in the related technology. Details are not described herein again.

It is collectively described herein that a dynamic range of the shooting scene may be divided into a high-dynamic range and a low-dynamic range based on a preset condition. For example, if a dynamic range value of the shooting scene meets a dynamic range (dynamic range, DR) constraint, the dynamic range is a high-dynamic range; and if the dynamic range value of the shooting scene does not meet the DR constraint, the dynamic range is a low-dynamic range.

Optionally, the DR constraint may be determined based on a histogram of a RAW image f the shooting scene. Specifically, the dynamic range of the scene is determined based on a percentage of overexposed pixel points and a percentage of underexposed pixel points in an image.

It should be understood that the foregoing division process of the high-dynamic range is merely an example of descriptions. This is not limited in embodiments of this application. In fact, whether the scene is a high-dynamic range scene may alternatively be determined based on other manners in the field.

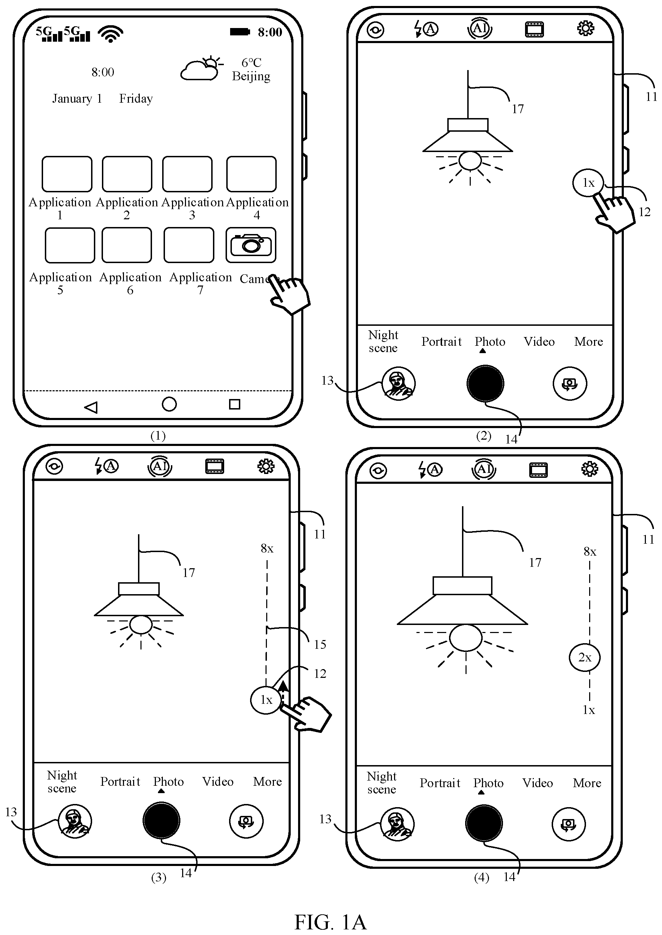

For ease of understanding, descriptions are made below with reference to an example of a photo preview application scene in FIG. 1A. A specific type of the electronic device is not limited in embodiments of this application. The following describes a shooting method in embodiments of this application by using an example in which the electronic device is a mobile phone.

FIG. 1A is an example diagram of an application scene under a high-illuminance environment for photo preview according to an embodiment of this application. As shown in a mobile phone interface in (1) in FIG. 1A, a plurality of application programs: an application 1, an application 2, ..., an application 7, and a camera application, may be displayed on the interface. The mobile phone starts the camera application in response to an operation performed by the user to tap a camera application program. After the camera application runs, the mobile phone interface displays an interface shown in (2) in FIG. 1A. The interface shown in (2) in FIG. 1A may be referred to as a photo preview interface of a camera. The photo preview interface may include a viewfinder frame 11, a light source 17, a zoom ratio 12 (defaulted as 1x), an album icon 13, a shooting control 14, a camera rotation control, and the like. The brightness of the light source 17 may determine whether the current shooting environment is an illuminance environment. For example, when the brightness of the light source 17 is high, causing ambient illuminance of the current shooting environment to be greater than a preset brightness threshold, it may be determined that a current scene is a high-illuminance scene (or a high-brightness scene).

The mobile phone may take a photo in response to an operation performed by a user to tap the shooting control 14. The album icon 13 displays a thumbnail of the photo. The camera rotation control may be configured to switch the camera. The viewfinder frame 11 is configured to obtain and shoot a preview image and may display the preview image in real time.

In a photo preview scene, the mobile phone supports digital zoom. When using a photo function, the user may select different zoom ratios through operating on a touchscreen. As an example, as shown in (2) in FIG. 1A, the user taps the zoom ratio 12 in (2) in FIG. 1A, an interface shown in (3) in FIG. 1A is displayed, and a selection option 15 (for example, a maximum zoom ratio is 8x, and a minimum zoom ratio is 1x) of the zoom ratio appears. When the user drags up the zoom ratio 12 in the selection option 15 and releases when the zoom ratio is 2x, an interface shown in (4) in FIG. 1A is displayed. That is, the zoom ratio of 2x is selected. It can be seen that a display region of the light source 17 in the viewfinder frame 11 shown in (4) in FIG. 1A correspondingly becomes larger. Definitely, after the zoom ratio is selected, the selection option 15 of the zoom ratio may be hidden, that is, the selected zoom ratio of 2x is displayed on the interface.

Definitely, the foregoing is described by using an example in which the selected zoom ratio in the photo preview scene is 2x. This is not limited in embodiments of this application. For example, the user may alternatively adjust the zoom ratio to be greater than 2x.

It should be understood that (2) to (4) in FIG. 1A are schematic diagrams of an interface when the user takes a photo in a portrait mode of the mobile phone. This is not limited in embodiments of this application. For example, the user may shoot in a landscape mode of the mobile phone.

In still some other embodiments, in a video preview mode, for a shooting scene with a zoom ratio greater than 2x (for example, 3x) in a high-illuminance environment, the sensor uses a full size (full size) crop (crop) mode for outputting an image.

The cropping refers to cropping a collected image, to obtain an image of a field angle corresponding to a target zoom ratio. For descriptions of the high-illuminance environment, reference may be made to the foregoing descriptions. For brevity, details are not described herein again.

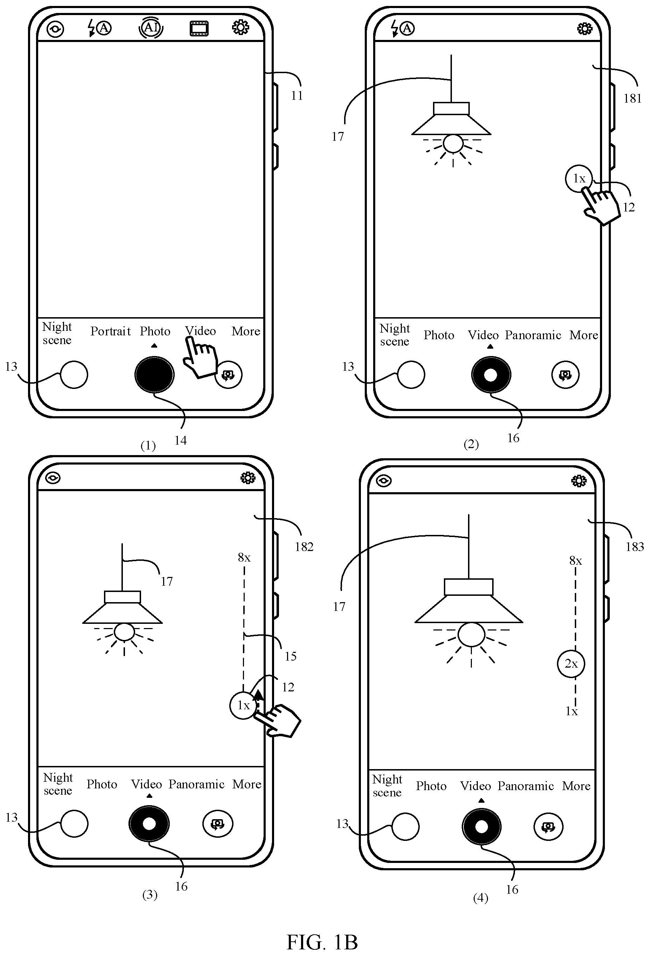

For ease of understanding, the following describes an example diagram of a high-illuminance environment in a video preview scene with reference to FIG. 1B. As shown in a photo preview interface in (1) in FIG. 1B, in response to an operation performed by the user to tap a video control, the mobile phone displays a video preview interface, for example, a video preview interface 181 shown in (2) in FIG. 1B.

As shown in (2) in FIG. 1B, the video preview interface 181 includes an album icon 13, a video control 16, a light source 17, and a zoom ratio 12 (defaulted as 1x). The light source 17 indicates that the current video preview scene is a high-brightness scene.

Similarly, in the video preview scene, the mobile phone may also support digital zoom. When using a video function, the user may select different zoom ratios through operating on the touchscreen. As an example, as shown in (2) in FIG. 1B, the mobile phone responds to an operation of tapping the zoom ratio 12 in (2) in FIG. 1B, and the interface displays an interface 182 shown in (3) in FIG. 1B. The interface 182 includes a selection option 15 of the zoom ratio (for example, a maximum zoom ratio is 8x, and a minimum zoom ratio is 1x). In response to an operation of dragging up the zoom ratio 12 in the selection option 15 and an operation performed by the user to release the zoom ratio when the zoom ratio is 2x, the mobile phone displays an interface 183 shown in (4) in FIG. 1B, that is, the zoom ratio of 2x is selected. Definitely, after the zoom ratio is selected, the selection option 15 of the zoom ratio may be hidden, that is, the selected zoom ratio of 2x is displayed on the interface.

Definitely, the foregoing is described by using an example in which the selected zoom ratio in the video preview scene is 2x. This is not limited in embodiments of this application. For example, the user may alternatively adjust the zoom ratio to be greater than 2x.

It should be understood that the interface shown in (2) to (4) in FIG. 1B may be an example interface of the application scene of embodiments of this application.

In some other embodiments, in the photo preview mode, for a shooting scene with a zoom ratio greater than 2x (for example, 3x) in a high-dynamic range environment, the sensor uses a full size (full size) crop (crop) stagger (stagger) mode for outputting an image.

For related descriptions of the high-dynamic range, reference may be made to the foregoing descriptions. For brevity, details are not described herein again.

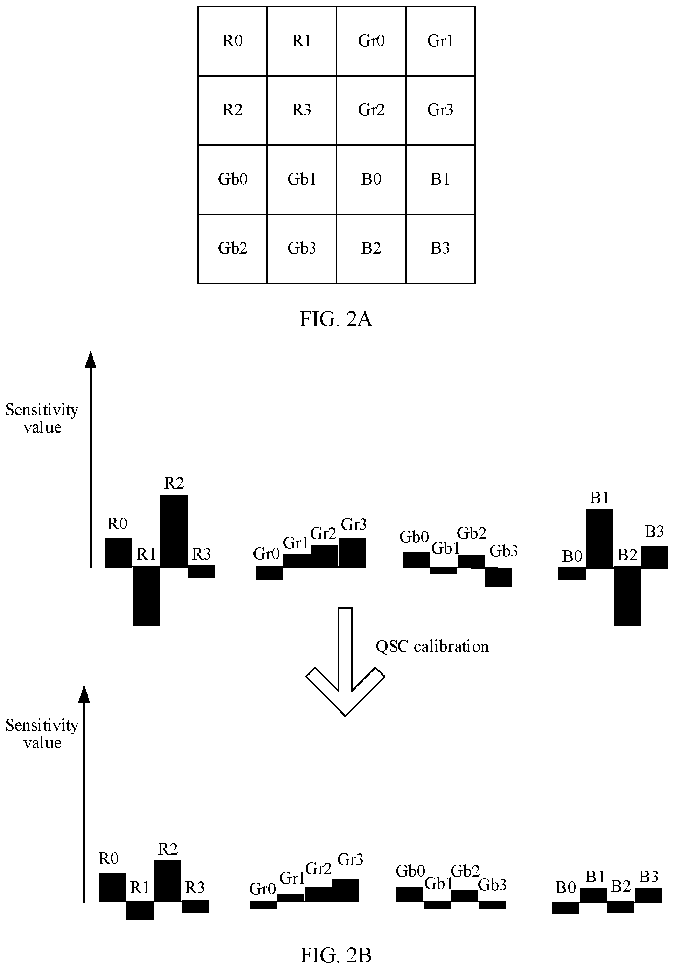

Embodiments of this application are applicable to a scene in which the sensor uses Quad bayer coding (Quad bayer coding, QBC) to output an image, or are applicable to a Quad sensor. A pixel arrangement manner of image data outputted by the Quad sensor is different from a pixel arrangement manner of image data outputted by a traditional sensor. The image data outputted by the Quad sensor is formed by four pixels (which may be respectively denoted as RGGB), and each pixel is formed by four sub-pixels. The following describes the pixel arrangement manner of the image data outputted by the Quad sensor with reference to FIG. 2A.

As shown in FIG. 2A, the image data outputted by the Quad sensor includes pixels of four colors, which are respectively R, Gr, Gb, and B. A pixel of each color is formed by 4 sub-pixels, which are respectively R0, R1, R2, and R3; Gr0, Gr1, Gr2, and Gr3; Gb0, Gb1, Gb2, and Gb3; and B0, B1, B2, and B3. For sub-pixels (or adjacent 2*2 sub-pixels of a same color) of a pixel of each color, such as R0, R1, R2, and R3, there is a sensitivity difference between sub-pixels of the same color. Therefore, Quad bayer coding sensitivity correction (Quad bayer coding sensitivity correction, QSC) calibration needs to be performed. The sensitivity difference may ultimately lead to a difference in brightness.

This is because if QSC correction (or QSC calibration) is not performed, the image data outputted by the Quad sensor has a problem of brightness non-uniformity, leading to a poor image effect of an outputted image. The poor image quality may be presented as: stripes appearing in the image, for example, crosstalk stripes or other forms of stripes.

FIG. 2B is a comparison diagram of a sensitivity difference between a pixel point before QSC correction is performed and a pixel point after QSC correction is performed. A vertical axis in FIG. 2B represents sensitivity (sensitivity) values corresponding to pixels (or sub-pixels) of different colors. As shown in FIG. 2B, for the sub-pixels R0, R1, R2, and R3, there is a large sensitivity difference before QSC correction is performed. However, after QSC correction is performed, the sensitivity difference between the sub-pixels R0, R1, R2, and R3 is reduced.

The foregoing four shooting scenes specifically include: (1) a shooting scene with a zoom ratio greater than 2x (for example, 3x) in a high-illuminance environment in the photo preview mode; (2) a shooting scene with a zoom ratio greater than 2x (for example, 3x) in a high-dynamic range in the photo preview mode; (3) a shooting scene with a zoom ratio greater than 2x (for example, 3x) in a high-illuminance environment in the video preview mode; and (4) a shooting scene twith a zoom ratio greater than 2x (for example, 3x) in a high-dynamic range in the video preview mode, where the sensor uses full size crop (full size crop) for outputting an image. In the foregoing four shooting scenes, if the aperture of the electronic device changes, the image data needs to be calibrated by using calibration data, to ensure an image effect. The calibration data refers to data that compensates for the collected image data.

Currently, during module factory calibration of the electronic device, QSC calibration data is burned into a memory like an EEPROM of the electronic device. In this way, before the sensor of the electronic device starts flowing, or when configuration of the camera is initialized, the calibration data may be invoked to correct the image data after the sensor starts flowing. That the sensor starts flowing may be understood as that the sensor starts to output image data, or transmits data streams. However, this manner cannot support a scene in which the aperture changes, or does not support a sensor having a variable aperture characteristic. In other words, when the electronic device switches from an aperture to another aperture, calibration data of the aperture before switching is still used. Consequently, a correction effect is poor, and image quality is affected.

In view of this, embodiments of this application provide a shooting method. In a scene in which the sensor uses Quad bayer coding QBC, delivery of the calibration data is supported after the aperture changes or after the sensor starts flowing, so that the QSC calibration data can be dynamically updated. Image data compensated by the calibration data can effectively reduce the brightness difference between the pixels, thereby reducing stripes caused by the brightness difference in the image and improving an image effect.

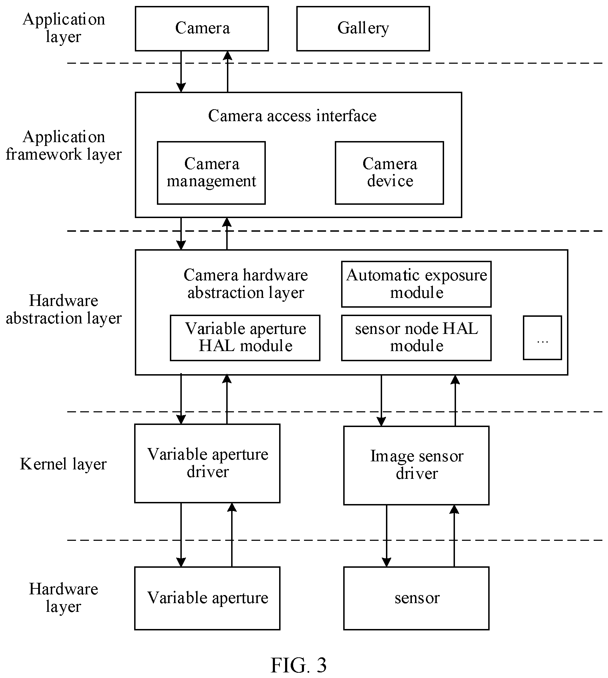

The following first describes a software system applied to embodiments of this application with reference to FIG. 3.

FIG. 3 is a schematic diagram of an architecture (including a software system and some hardware) applied to an embodiment of this application. As shown in FIG. 3, an application architecture is divided into several layers, and each layer has a clear role and task. The layers communicate with each other by using a software interface. In some embodiments, the application architecture may be divided into five layers, which are respectively an application layer (Application Layer), an application framework layer (Application Framework Layer), a hardware abstraction layer (Hardware Abstraction Layer), a kernel layer (Kernel Layer), and a hardware layer (Hardware Layer) from top to bottom.

As shown in FIG. 3, the application layer includes a camera and a gallery. It may be understood that FIG. 3 shows some application programs. In fact, the application layer may further include other application programs (including a system application program and/or a third-party application program). This is not limited in this application. For example, the application layer further includes application programs such as Message, Alarm clock, Weather, Stopwatch, Compass, Timer, Flashlight, Calendar, and Alipay.

As shown in FIG. 3, the application framework layer includes a camera access interface. For example, the camera access interface includes camera management and a camera device. The hardware abstraction layer includes an automatic exposure (automatic exposure, AE) module, a variable aperture HAL module, and a sensor service processing module (for example, a sensor node HAL module). The AE module is configured to automatically adjust exposure time of the sensor to adjust image brightness when a lighting condition of an external environment changes.

It may be understood that the hardware abstraction layer shown in FIG. 3 may further include other modules. This is not limited in embodiments of this application. For example, optionally, the hardware abstraction layer may further include a camera algorithm library. The camera algorithm library includes an image processing algorithm module.

The kernel layer is configured to drive a hardware resource. The kernel layer may include a plurality of driving modules. As shown in FIG. 3, the kernel layer includes a variable aperture driver and an image sensor driver. Optionally, the kernel layer may further include a digital signal processor driver, a graphics processing unit driver, and the like.

The hardware layer includes various hardware resources. As shown in FIG. 3, the hardware layer includes hardware related to a camera module, for example, an image sensor (sensor) and a variable aperture component.

Optionally, the camera module further includes a programmable read-only memory (electrically EPROM, EEPROM) or other storage resources. The EEPROM may store QSC calibration data corresponding to the aperture.

Optionally, the hardware layer further includes other sensors (such as an ambient light sensor), an image signal processor, a digital signal processor, and a graphics processing unit.

It should be understood that the software architecture shown in FIG. 3 is merely an example description. This is not limited in embodiments of this application. In fact, each layer in FIG. 3 may include more other modules.

A method time sequence interaction flowchart when the software architecture in FIG. 3 is applied is briefly described with reference to FIG. 4. A sensor node HAL module and a variable aperture HAL module shown in FIG. 4 may be located in the HAL layer in FIG. 3. A variable aperture driver and an image sensor driver shown in FIG. 4 may be located in the kernel layer in FIG. 3. The kernel layer and the hardware abstraction layer in FIG. 4 communicate through an intermediate layer (or interface, alternatively briefly referred to as an intermediate layer). As shown in FIG. 4, the flowchart includes, but is not limited to, the following steps.

Step 1: A sensor node HAL module delivers an execute process request (Execute Process Request) to a variable aperture HAL module.

The execute process request may correspond to each image frame. In other words, when each image frame is outputted, the sensor node HAL module delivers the execute process request.

Optionally, the execute process request includes an aperture parameter. For example, the aperture parameter is an aperture value (that is, VA code).

Step 2: The variable aperture HAL module obtains an aperture parameter. The aperture parameter is configured for implementing aperture switching.

After receiving the execute process request, the variable aperture module obtains the aperture parameter from the execute process request. For example, the variable aperture HAL module invokes an aperture parameter method function, and converts the aperture parameter into a variable aperture parameter value through the aperture parameter method function. For example, the aperture parameter method function is a GetVAparams method function, and the aperture value (that is, VA code) is obtained from an AE tag through the GetVAparams method function. The AE tag may be understood as a parameter delivered by the AE module. The GetVAparams method function is a function for obtaining the aperture parameter. In other words, the aperture value may be obtained from the AE tag by invoking the GetVAparams method function.

Step 3: The variable aperture HAL module delivers the aperture parameter to an intermediate layer.

Step 4: The intermediate layer delivers the aperture parameter to a variable aperture driver.

Step 5: The variable aperture driver applies the aperture parameter.

For example, the variable aperture driver applies the aperture parameter to perform aperture switching, and the current aperture is switched to a first aperture corresponding to the aperture parameter.

Definitely, after the variable aperture driver applies the aperture parameter, hardware (for example, the first aperture) of a corresponding aperture is driven to work.

Step 6-1: The variable aperture driver returns an application result of the aperture parameter to the intermediate layer.

Step 6-2: The intermediate layer transfers the application result of the aperture parameter to the variable aperture HAL module.

Step 6-3: The variable aperture HAL module transfers the application result of the aperture parameter to the sensor node HAL module.

Step 7: The sensor node HAL module delivers QSC calibration data to the intermediate layer.

Specifically, after determining that the aperture parameter has changed, the sensor node HAL module may deliver a command including the QSC calibration data. The QSC calibration data corresponds to a switched aperture (for example, the QSC calibration data corresponding to the first aperture), to update the QSC calibration data timely to adapt to the switched aperture.

Step 8: The intermediate layer transfers the QSC calibration data to an image sensor driver.

Step 9: The image sensor driver applies the QSC calibration data, or in other words, the QSC calibration data takes effect.

Optionally, the QSC calibration data is a set of sequences or matrices formed by brightness offset values. Using an example in which the QSC calibration data is a matrix, each element in the matrix corresponds to a pixel point (specifically, may correspond to a sub-pixel of a pixel), and a value of an element in the matrix is a calibration data value corresponding to the pixel point (or sub-pixel).

For each sub-pixel of the pixel point, the pixel value may be compensated by using the corresponding calibration data value. Taking a sub-pixel of one of the pixel points as an example, it is assumed that a pixel value of a sub-pixel of a pixel point is 100, and by superposing a corresponding calibration data value (for example, the calibration data value corresponding to the sub-pixel of the pixel point is -20) on the pixel value, a compensated pixel value is obtained as 80. For a pixel value of each pixel point, superimposition is performed by using the corresponding calibration data value, to reduce a brightness difference.

It should be understood that, in embodiments of this application, only the QSC calibration data (for example, first calibration data or second calibration data) is used as a name for description. This is not limited in embodiments of this application. In fact, the calibration data may also have other names or designations, such as compensation data, correction data, calibration data, and the like. However, regardless of how the calibration data is named, essence of the term remains unchanged, that is, the relevant explanation of the term can refer to the foregoing descriptions of the calibration data.

Step 10-1: The image sensor driver returns an application result of the QSC calibration data to the intermediate layer.

Step 10-2: The intermediate layer transfers the application result of the QSC calibration data to the sensor node HAL module.

For the flowchart in FIG. 4, the foregoing step 3 to step 6-3 may be understood as a process of changing the aperture, or a process of switching the aperture. The foregoing step 7 to step 10-2 may be understood as a process of delivering the QSC calibration data.

In some embodiments, step 3 to step 6-3 occur in one image frame, and step 7 to step 10-2 occur in a next image frame of the image frame. For example, step 3 to step 6-3 occur in an $(N+1)^{th}$ frame, and step 7 to step 10-2 occur in an $(N+2)^{th}$ frame.

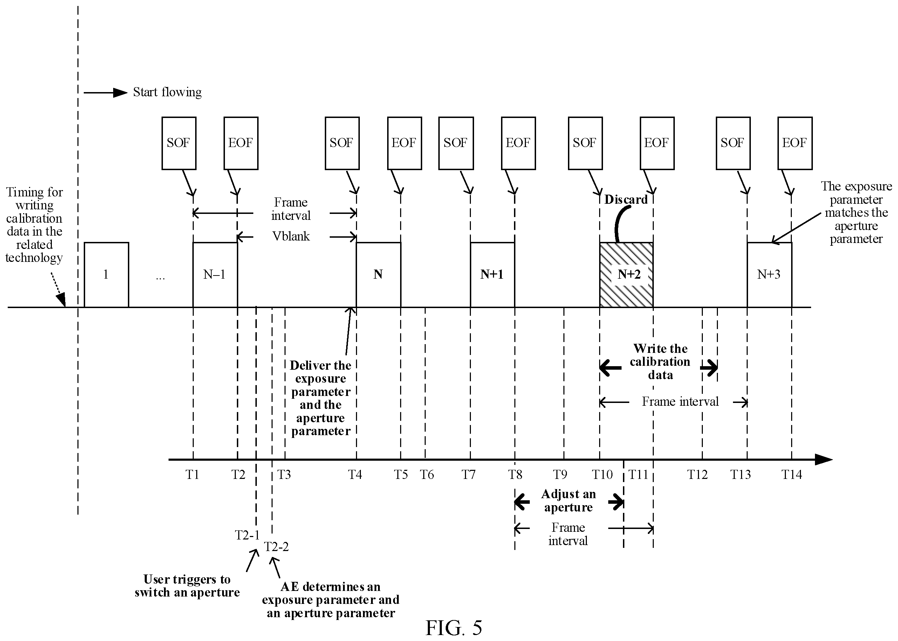

For ease of understanding a time sequence of delivering the calibration data in embodiments of this application, descriptions are provided below with reference to a time sequence in FIG. 5. As shown in FIG. 5, FIG. 5 shows a timeline after the sensor starts flowing. T1 to T14 may be understood as some corresponding time after the sensor starts flowing. An $(N-1)^{th}$ frame is used as an example for description. A time stamp corresponding to a start-of-frame delimiter (start-of-frame delimiter, SOF) of the $(N-1)^{th}$ frame is T1, a time stamp corresponding to an end-of-frame delimiter (end-of-frame delimiter, EOF) of the $(N-1)^{th}$ frame is T2, and time stamps corresponding to other image frames can be deduced by analogy. A time interval between the EOF of the $(N-1)^{th}$ frame and a SOF of an $N^{th}$ frame may be referred to as Vblank, that is, a duration between T2 and T4. A frame interval between the $(N-1)^{th}$ frame and the $N^{th}$ frame is the time interval between T1 and T4.

In this embodiment of this application, the QSC calibration data is delivered on the premise that the aperture changes, and the sensor has started flowing. In other words, in embodiments of this application, the QSC calibration data is delivered in two stages. The first stage is a stage of adjusting the aperture, and the second stage is a stage of delivering the QSC calibration data. Optionally, the second stage may occur after the first stage. Alternatively, optionally, the second stage is performed synchronously during occurrence of the first stage. Generally, before delivery of the QSC calibration data is completed, aperture switching is completed. In conclusion, after the two stages are completed, an image frame outputted by the sensor matches latest QSC calibration data and a latest aperture effect. Detailed time sequences of the two stages are respectively described below.

First stage

The sensor receives the exposure parameter and the aperture parameter (configured for switching the aperture to the first aperture) delivered by the AE module before the time stamp corresponding to the SOF of the $N^{th}$ frame, that is, before T4. After obtaining the exposure parameter and the aperture parameter, the sensor starts to setting the exposure parameter at the SOF of the $N^{th}$ frame. In addition, the sensor starts to adjust the aperture at an EOF of an $(N+1)^{th}$ frame (that is, T8), which may be understood as switching the current aperture to the first aperture.

The AE module delivers the exposure parameter and the aperture parameter to the sensor and delivers the aperture parameter to the aperture based on a decision or an instruction delivered by the camera application.

An object or a timing of triggering the aperture to change is not limited in embodiments of this application. The electronic device may automatically switch the aperture with reference to a shooting mode or a shooting scene, or the user may actively trigger to switch the aperture. For example, when using a professional shooting mode to shoot, the user actively changes the aperture, which triggers an aperture adjustment instruction.

Optionally, in a scene in which the user triggers to switch the aperture, a corresponding time stamp for the user to trigger to switch the aperture may be T2-1 in FIG. 5 or a time stamp earlier than T2-1. This is not specifically limited.

Optionally, a corresponding time stamp for the AE module to determine the exposure parameter and the aperture parameter may be T2-2.

After receiving the foregoing exposure parameter, the sensor performs exposure based on the exposure parameter from a time stamp before an SOF of an $(N+2)^{th}$ frame and after an SOF of the $(N+1)^{th}$ frame (for example, T7 in FIG. 5). For example, the sensor performs exposure from T9 to T11 based on the exposure parameter and outputs an exposure result in the $(N+2)^{th}$ frame. However, since in embodiments of this application, the $(N+2)^{th}$ frame is discarded, it may be considered that the exposure result is outputted in a next frame of the $(N+2)^{th}$ frame (that is, an $(N+3)^{th}$ frame). For an activation mechanism of the exposure parameter, reference may be made to the descriptions in the related technology. Details are not described herein again.

Since adjustment of the aperture starts at the EOF of the $(N+1)^{th}$ frame (that is, T8), and the adjustment of the aperture requires a duration, the process of adjusting the aperture affects image brightness of the $(N+2)^{th}$ frame. Therefore, image data corresponding to the $(N+2)^{th}$ frame needs to be discarded (or skipped), that is, an image corresponding to the $(N+2)^{th}$ frame is not displayed.

Optionally, an image corresponding to the $(N+1)^{th}$ frame may be displayed within a display duration of the $(N+2)^{th}$ frame. In other words, since the $(N+2)^{th}$ frame is a frame outputted by the sensor when the aperture changes, the image brightness of the $(N+2)^{th}$ frame is abnormal, or exposure of the $(N+2)^{th}$ frame is affected. To avoid presenting the user with an image frame with abnormal brightness, a last normal image frame before the adjustment of the aperture (that is, the $(N+1)^{th}$ frame) may be displayed.

Second stage

The sensor starts writing the QSC calibration data corresponding to the first aperture at the SOF of the $(N+2)^{th}$ frame. For example, writing of the QSC calibration data corresponding to the first aperture starts at a time stamp T10.

It should be noted that, to minimize as much as possible impact on image quality caused by writing the QSC calibration data, it may be considered to perform writing of the QSC calibration data corresponding to the first aperture during a frame interval (frame time) to avoid affecting image quality. The frame interval may be specifically an interval between the SOF of the $(N+2)^{th}$ frame and an SOF of the $(N+3)^{th}$ frame.

In addition, since when the calibration data corresponding to the first aperture is written, a QSC function (or a correction function) is turned off, and latest written QSC calibration data does not take effect. From this perspective, image quality of the $(N+2)^{th}$ frame is also affected. Therefore, the $(N+2)^{th}$ frame needs to be discarded. As described above, the image corresponding to the $(N+1)^{th}$ frame may be transmitted for display, to ensure that a preview image presented to the user is an image frame with proper brightness, so that an image display effect is not affected.

Since writing of the QSC calibration data corresponding to the first aperture takes up a duration, to reduce the duration required for writing the QSC calibration data, in embodiments of this application, the QSC calibration data is preprocessed, to compress a quantity of bits corresponding to the QSC calibration data.

In some embodiments, the QSC calibration data corresponding to the first aperture is calibration data obtained by preprocessing original QSC calibration data (or the second calibration data, or the calibration data before preprocessing).

A specific preprocessing manner is not limited in embodiments of this application. In some embodiments, an application scene to which this embodiment of this application is applicable is related to a zoom ratio (for example, applied to a zoom ratio greater than 2x). Because for a scene with a zoom ratio greater than 2x, when the sensor outputs an image, corresponding crop (crop) is performed on image data with reference to the zoom ratio, to reduce impact of delivering the QSC calibration data on an image frame as much as possible, the QSC calibration data is preprocessed, and only QSC calibration data corresponding to a cropped image is delivered. In this way, a data compensation effect is ensured, and a duration consumed for delivering the QSC calibration data is reduced.

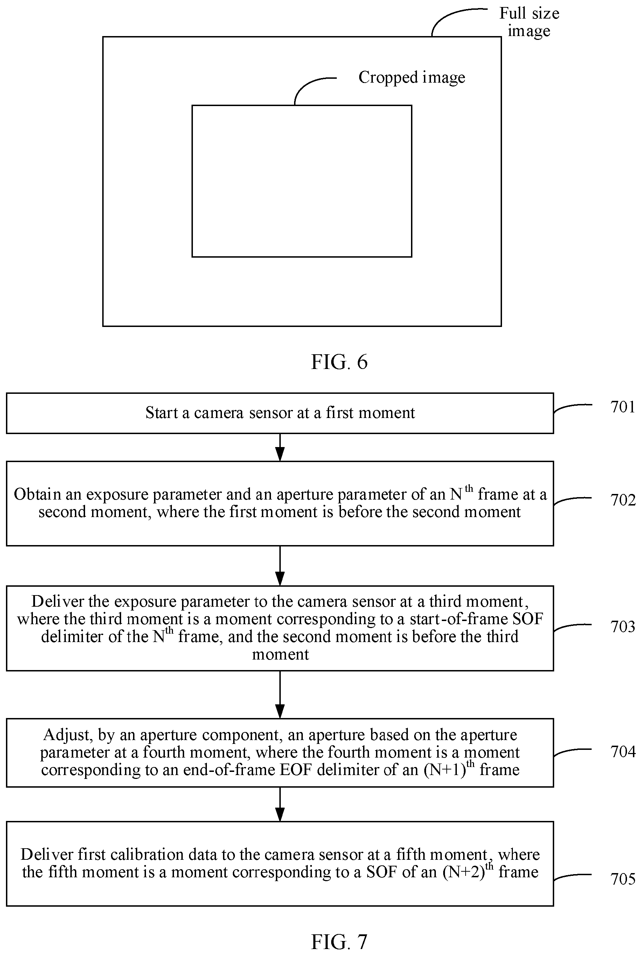

For ease of understanding, with reference to FIG. 6, a process of image cropping is performed when the sensor outputs an image. As shown in FIG. 6, a size of a cropped image is apparently less than a size of a full size image. An image size corresponding to the foregoing QSC calibration data is preprocessed. For example, in a full size mode, an image size is 8192*6144, and after cropping, an image size of a cropped central region is 4096*3072. In this way, the QSC calibration data is preprocessed, and only the QSC calibration data corresponding to an image of the cropped central region is delivered, thereby reducing a duration of transmitting the QSC calibration data.

Optionally, a quantity of bits corresponding to the QSC calibration data corresponding to the first aperture is less than a quantity of bits corresponding to the original QSC calibration data.

For example, the quantity of bits corresponding to the original QSC calibration data is 3536 bytes, and correspondingly, a transmission duration is approximately 43 milliseconds. The QSC calibration data corresponding to the first aperture is 1008 bytes, and correspondingly, a transmission duration is approximately 15 milliseconds.

After the quantity of bits corresponding to the QSC calibration data corresponding to the first aperture is reduced, the transmission duration of the QSC calibration data is also correspondingly reduced. A process of writing the QSC calibration data corresponding to the first aperture occurs between the SOF of the $(N+2)^{th}$ frame and the SOF of the $(N+3)^{th}$

frame, and an image corresponding to the affected (N+2)th frame is discarded.

Optionally, the transmission duration of the QSC calibration data corresponding to the first aperture is less than the frame interval between the (N+2)th frame and the (N+3)th frame.

For example, the transmission duration of the QSC calibration data corresponding to the first aperture is 15 milliseconds, and the frame interval between the SOF of the (N+2)th frame and the SOF of the (N+3)th frame is 33 milliseconds. It can be seen that, the transmission duration of the QSC calibration data corresponding to the first aperture is less than a duration of the frame interval, that is, delivery of the QSC calibration data corresponding to the first aperture may be completed in one image frame, and therefore, only one frame of data is affected.

After the transmission duration of the QSC calibration data corresponding to the first aperture is reduced, a quantity of affected image frames is reduced correspondingly, that is, the affected image frames include only the (N+2)th frame, and a larger quantity of image frames is not affected, thereby obtaining better shooting experience.

After the first stage and the second stage, when the sensor outputs the (N+3)th frame, that is, starting from T13, the QSC calibration data corresponding to the first aperture and an effect corresponding to the first aperture may take effect. In addition, in the (N+3)th frame, the exposure parameter matches the aperture parameter. Since the aperture has been switched to the first aperture, and latest delivered QSC calibration data corresponding to the first aperture has also taken effect, compared with further compensating by using the QSC calibration data corresponding to an original aperture (that is, the aperture before switching), obtained image quality corresponding to the (N+3)th frame is better than image quality obtained by using the QSC calibration data corresponding to the original aperture.

It should be noted that a timing of writing the QSC calibration data in embodiments of this application occurs after the sensor starts flowing. As shown in FIG. 5, compared with a timing of writing the QSC calibration data before starting flowing in the related technology (in other words, although the camera is turned on, the sensor does not output an image), writing of the QSC calibration data in embodiments of this application occurs after the sensor starts flowing, specifically, after the aperture changes. Advantages are that QSC calibration data matching the switched aperture can be delivered, or the QSC calibration data can be dynamically updated based on a change of the aperture, so that the QSC calibration data corresponds to the switched aperture, thereby achieving better correction or compensation, and obtaining a better image effect.

A storage space into which the QSC calibration data (for example, the QSC calibration data corresponding to the first aperture) is written is not specifically limited in embodiments of this application. Using the QSC calibration data corresponding to the first aperture as an example, the storage space in which the QSC calibration data corresponding to the first aperture is located may have the following different implementations.

In an implementation, the QSC calibration data corresponding to the first aperture is stored in OTP.

For example, if the QSC calibration data corresponding to the first aperture needs to be written, the QSC calibration data corresponding to the first aperture may be written into a sensor OTP.

In another implementation, the QSC calibration data corresponding to the first aperture is stored in a non-volatile memory EEPROM.

For example, if the QSC calibration data corresponding to the first aperture needs to be written, the QSC calibration data corresponding to the first aperture may be written into the EEPROM, and then the written QSC calibration data corresponding to the first aperture is transmitted to the sensor to take effect. Advantages are that when a pre-reserved OTP space of the sensor is small, or even no OTP space is pre-reserved, writing the calibration data into the EEPROM may be an option. In addition, because the storage space of the sensor OTP is small, the sensor OTP is easily damaged. In this case, to improve reliability, the QSC calibration data corresponding to the first aperture may be stored by plugging an EEPROM into the camera module.

In another implementation, the QSC calibration data corresponding to the first aperture is stored in a system configuration file oeminfo.

For example, when the QSC calibration data corresponding to the first aperture needs to be written, the QSC calibration data corresponding to the first aperture may be stored in the oeminfo. Therefore, when the sensor does not pre-reserve the OTP space and is not provided with the EEPROM, the first calibration data may also be stored in the oeminfo.

A flowchart of the shooting method in embodiments of this application is described below with reference to a flowchart shown in FIG. 7. As shown in FIG. 7, the method includes:

Step 701: Start a camera sensor at a first moment.

The first moment may be understood as a moment at which a user triggers a camera. For example, the first moment is a moment at which the sensor starts flowing in FIG. 5.

How to start the camera sensor is not specifically limited in embodiments of this application. Optionally, the camera sensor is started in response to a first operation performed by the user at the first moment. After the electronic device detects an operation of turning on a camera, the camera may be started to begin collecting image data.

A manner in which the user triggers the camera is not limited in embodiments of this application. The first operation is an operation configured for triggering to turn on the camera of the electronic device. The first operation includes, but is not limited to, a touch operation, a button operation, a voice control, and the like. A specific manner of the first operation is not specifically limited in embodiments of this application.

Optionally, the first operation is an operation of opening a camera application program. For example, as shown in (1) in FIG. 1A, the first operation is an operation performed by the user to tap the camera application program to start the camera.

Step 702: Obtain an exposure parameter and an aperture parameter of an $N^{th}$ frame at a second moment, where the first moment is before the second moment.

Optionally, the aperture parameter is configured for instructing the camera sensor to switch from a current aperture to the first aperture.

In some embodiments, the exposure parameter and the aperture parameter of the $N^{th}$ frame are determined by using an automatic exposure module, and the exposure parameter and the aperture parameter are cached in a camera driver.

An order of obtaining the exposure parameter and the aperture parameter is not limited in embodiments of this application. In other words, whether a timing of obtaining the exposure parameter and a timing of obtaining the aperture parameter are a same timing is not limited in embodiments of this application.

At the second moment, the obtaining an exposure parameter and an aperture parameter of an $N^{th}$ frame may include the following three cases: (1) obtaining the exposure parameter and the aperture parameter simultaneously after parameter adjustment; (2) first obtaining the exposure parameter, and then obtaining the aperture parameter corresponding to the exposure parameter; and (3) first obtaining the aperture parameter, and then obtaining the exposure parameter corresponding to the aperture parameter.

A trigger operation of obtaining the exposure parameter and the aperture parameter is not limited in embodiments of this application. Optionally, in some embodiments, the obtaining an exposure parameter and an aperture parameter of an $N^{th}$ frame includes: obtaining the exposure parameter and the aperture parameter in response to a second operation. In other words, the foregoing exposure parameter and the foregoing aperture parameter may be obtained in response to the second operation.

The second operation may be understood as an operation of triggering the aperture of the electronic device to switch. A specific form of the second operation is not limited in embodiments of this application.

Optionally, the second operation is an operation performed by the user to manually adjust the aperture. In other words, at the second moment, the electronic device may obtain the exposure parameter and the aperture parameter in response to the operation performed by the user to manually adjust the aperture.

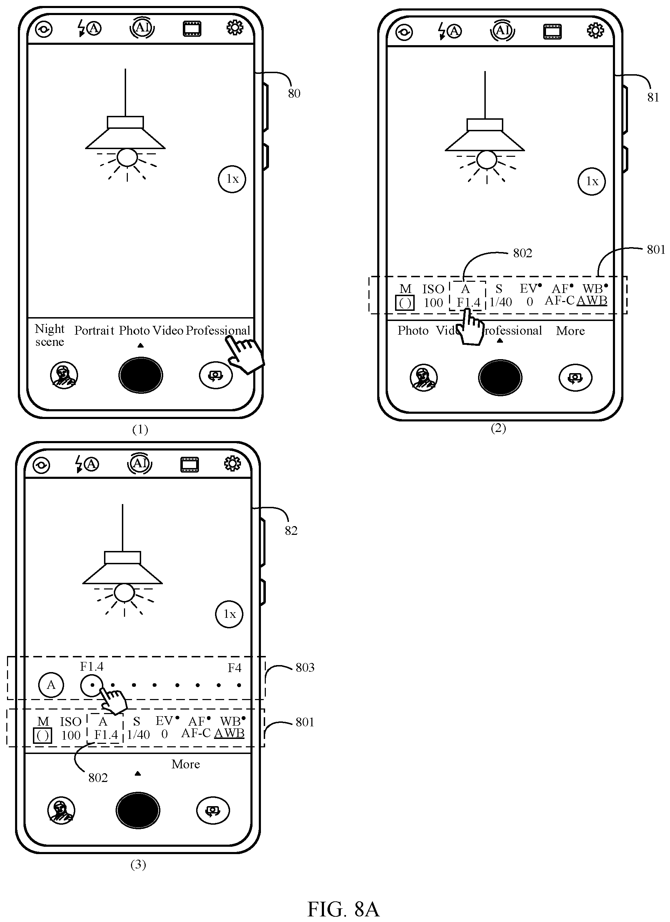

For example, the second operation is an operation performed by the user to manually adjust the aperture in a professional photographing mode. FIG. 8A shows an interface example of adjusting an aperture by a user in a professional mode. As shown in (1) in FIG. 8A, using a photo preview interface 80 as an example, the interface 80 includes a professional mode. A mobile phone displays, in response to an operation performed by the user to tap the professional mode, an interface 81 shown in (2) in FIG. 8A.

The interface 81 shown in (2) in FIG. 8A is a preview interface in the professional mode. In the professional mode, related parameters of camera settings may be manually adjusted by the user. As shown in (2) in FIG. 8A, a display region 801 of the camera interface 81 includes setting options of a plurality of camera parameters. The display region 801 includes at least an aperture adjustment control 802, or an icon "A". The icon "A" may also be understood as an aperture setting button.

The mobile phone displays, in response to an operation performed by the user to tap the aperture adjustment control 802, an interface 82 shown in (3) in FIG. 8A. The interface 82 includes at least a display region 803. The display region 803 displays a control for adjusting the aperture. The mobile phone switches to a corresponding aperture in response to an operation of adjusting the aperture (for example, an operation performed by the user to swipe leftwards or rightwards) performed in the region 803. In the interface shown in FIG. 8A, the second operation is an operation performed by the user to manually adjust the aperture in the region 803 of the interface 81.

It may be understood that the interface for adjusting the aperture shown in (3) in FIG. 8A is merely an example description. This is not limited in embodiments of this application. For example, the interface for adjusting the aperture in the display region 803 may alternatively be in a form of a wheel. Correspondingly, an operation performed by the user to adjust an aperture size may be an operation of adjusting the wheel.

It may be further understood that the display region 801 further shows other camera parameters in the professional mode. Optionally, the region 801 shown in (2) in FIG. 8A further includes the following camera parameters: a photometric manner (corresponding to an icon "M"), an ISO parameter (corresponding to an icon ISO, for example, an ISO value in the figure is 100), a shutter speed (corresponding to an icon "S", for example, the shutter speed in the figure is 1/40), a exposure compensation (corresponding to an icon "EV"), a focus manner (corresponding to an icon "AF"), and a white balance parameter (corresponding to an icon "WB"). For explanations of the camera parameter, reference may be made to the descriptions in the related technology. Details are not described herein again.

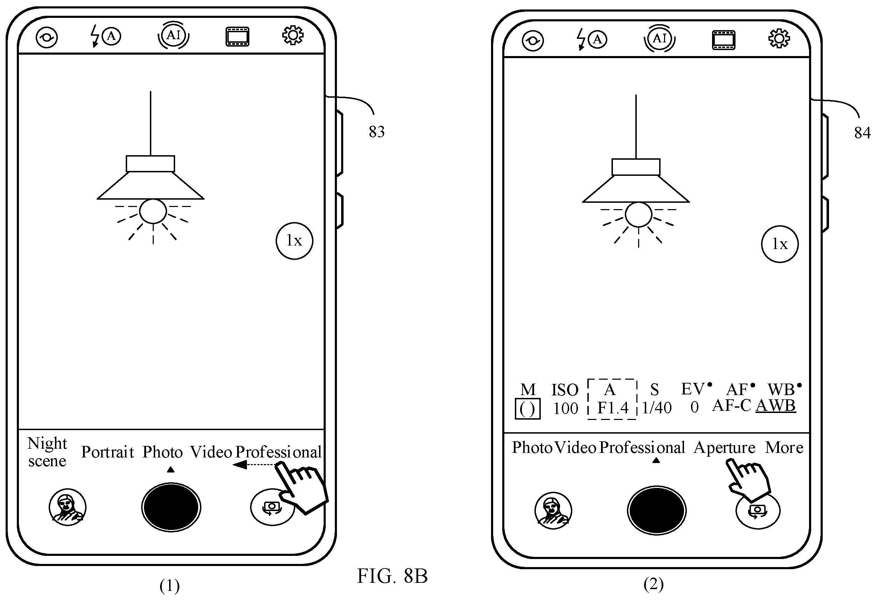

For example, the second operation is an operation performed after the user switches a current photographing mode to a large aperture shooting mode. FIG. 8B shows an interface example in which a user switches a normal photographing mode to a large aperture mode. As shown in an interface 83 in (1) in FIG. 8B, the interface 83 is a photo preview interface. In response to an operation performed by the user to swipe rightwards in a photographing mode region of the interface 83, the mobile phone displays an interface 84 shown in (2) in FIG. 8B. The interface 84 presents more options of the photographing mode, and the options of the photographing mode include at least the large aperture mode. In response to an operation performed by the user to tap the large aperture mode, the mobile phone enters the large aperture shooting mode and adjusts the aperture correspondingly. In the interface shown in FIG. 8B, the second operation is the operation performed by the user to tap the large aperture mode.

It should be understood that an entry of the professional mode or the large aperture mode is merely an example description. This is not limited in embodiments of this application.

Based on the interface shown in FIG. 8A or FIG. 8B, the mobile phone may perform aperture writing in response to the operation performed by the user to manually adjust the aperture, so that the mobile phone may adjust the aperture based on user requirements, to help the user to take a photo with better image quality.

Alternatively, optionally, the second operation is an operation performed by an electronic device to manually adjust the aperture.

At the second moment, the electronic device may obtain the exposure parameter and the aperture parameter based on the operation of automatically adjusting the aperture. For example, the electronic device is equipped with a variable aperture, after detecting a specific shooting scene, the electronic device automatically adjusts the aperture based on a light condition of the shooting scene, and in this case, the electronic device obtains the exposure parameter and the aperture parameter.

Step 703: Deliver the exposure parameter to the camera sensor at a third moment, where the third moment is a moment before a moment corresponding to a start-of-frame SOF delimiter of the $N^{th}$ frame, and the second moment is before the third moment.

It should be noted that after being delivered to the camera sensor, the exposure parameter may take effect from a time stamp before the SOF of the $(N+2)^{th}$ frame and after the SOF of the $(N+1)^{th}$ frame (for example, T7 in FIG. 5). For example, the exposure parameter takes effect from T9 shown in FIG. 5, that is, exposure is performed based on the exposure parameter from T9. For another example, the exposure parameter takes effect from T8 shown in FIG. 5. It should be understood that a moment when the exposure parameter starts to take effect shown herein is merely an example of descriptions. This is not limited in embodiments of this application. In addition, a process of writing the calibration data affects the $(N+2)^{th}$ frame, and the $(N+2)^{th}$ frame is discarded (for example, during the display duration of the $(N+2)^{th}$ frame, the image of the $(N+1)^{th}$ frame is transmitted for display). Therefore, the brightness of the $(N+3)^{th}$ frame is consistent with the brightness of the $N^{th}$ frame and the $(N+1)^{th}$ frame, and the exposure parameter matches the aperture parameter in the $(N+3)^{th}$ frame. That the exposure parameter matches the aperture parameter means that in the $(N+3)^{th}$ frame, the aperture is successfully switched, the delivered QSC calibration data corresponding to the aperture also matches the aperture, and the exposure parameter also takes effect. Certainly, after the aperture is successfully switched, the AE module may subsequently deliver a corresponding exposure parameter with reference to an actual situation. For example, the exposure parameter corresponding to the switched aperture is delivered in the $(N+3)^{th}$ frame. For a delivery mechanism and an effective mechanism of the exposure parameter, reference may be made to descriptions in the related technology. For brevity, details are not described herein again.

In some embodiments, after the T2-2 moment and before the T4 moment, the camera sensor HAL obtains the aperture parameter and the exposure parameter inputted by the AE module. The camera sensor HAL transmits the exposure parameter to a sensor driver. The sensor driver may transmit the exposure parameter to hardware (that is, the camera sensor), so that the exposure parameter subsequently takes effect.

In some embodiments, the camera sensor HAL transmits the aperture parameter to the aperture HAL. After obtaining the aperture parameter, the aperture HAL may transmit the aperture parameter to an aperture motor driver. The aperture motor driver may transmit the aperture parameter to the hardware (the aperture component) to take effect.

For example, the aperture HAL invokes an aperture parameter method function, and converts the aperture parameter into a variable aperture parameter value (VA code) by using the aperture parameter method function.

Step 704: Adjust an aperture based on the aperture parameter at a fourth moment by an aperture component, where the fourth moment is a moment corresponding to an end-of-frame EOF delimiter of an $(N+1)^{th}$ frame.

For example, the fourth moment is T8 in FIG. 5. In other words, from the EOF of the $(N+1)^{th}$ frame, the aperture is adjusted based on the aperture parameter, that is, the current aperture is switched, based on the aperture parameter, to the first aperture indicated by the aperture parameter.

It may be understood that the aperture also needs to be adjusted for a duration. For example, FIG. 5 shows a duration required for adjusting the aperture. Adjustment of the aperture affects the $(N+2)^{th}$ frame but does not affect the $(N+3)^{th}$ frame. The $(N+2)^{th}$ frame may also be referred to as an aperture change frame.

Step 705: Deliver first calibration data to the camera sensor at a fifth moment, where the fifth moment is a moment corresponding to a SOF of an $(N+2)^{th}$ frame.

Optionally, the first calibration data is calibration data corresponding to the first aperture. Correspondingly, the aperture parameter is configured for instructing the camera sensor to switch from a current aperture to the first aperture. In other words, when the electronic device switches from the current aperture to the first aperture, the delivered first calibration data is calibration data corresponding to the switched first aperture, that is, the first calibration data.

Based on the exposure parameter, the aperture parameter, and the first calibration data, an image corresponding to an $(N+3)^{th}$ frame is displayed within a display duration corresponding to the $(N+3)^{th}$ frame. In other words, after the calibration data is delivered, the exposure parameter and the aperture parameter of the image that is of the $(N+3)^{th}$ frame and that is transmitted for display match. For related descriptions, reference may be made to the descriptions in FIG. 5. Details are not described herein again.

In some embodiments, when the camera sensor of the electronic device is a Quad sensor, the first calibration data is the QSC calibration data corresponding to the first aperture.

For example, the fifth moment is T10 in FIG. 5. In other words, from the SOF of the $(N+2)^{th}$ frame, the QSC calibration data corresponding to the first aperture is delivered to the sensor.

In some embodiments, the camera sensor HAL delivers the QSC calibration data corresponding to the first aperture to the sensor driver. The sensor driver delivers the QSC calibration data corresponding to the first aperture to hardware (that is, the camera sensor), so that the QSC calibration data subsequently takes effect.

In embodiments of this application, the electronic device supports switching the calibration data corresponding to the aperture after the sensor starts flowing. In other words, after the aperture changes, the electronic device may switch the calibration data corresponding to the aperture correspondingly, to perform image data compensation based on appropriate calibration data and improve image quality. Compared with a manner in which a set of calibration data is burned only before the sensor starts flowing, in embodiments of this application, switching of the calibration data may also be implemented after the sensor starts flowing, thereby improving image output quality.

Further, the first calibration data is calibration data obtained by preprocessing second calibration data, where a quantity of bits corresponding to the second calibration data is greater than a quantity of bits corresponding to the first calibration data. As described above, the calibration data is preprocessed, to reduce the quantity of bits corresponding to the calibration data, to reduce a transmission duration when the calibration data is delivered, thereby reducing a quantity of affected image frames as much as possible.

Specifically, for example, after receiving the exposure parameter and the aperture parameter before the SOF of the $N^{th}$ frame, the electronic device starts to adjust the aperture based on the aperture parameter at the EOF of the $(N+1)^{th}$ frame, and delivers the QSC calibration data of the adjusted aperture at the SOF of the $(N+2)^{th}$ frame. In this way, the exposure parameter matches the aperture parameter at the $(N+3)^{th}$ frame. In this process, the affected image frame is only the $(N+2)^{th}$ frame and no more image frames are affected.

Optionally, the transmission duration of the first calibration data is less than the frame interval between the $(N+2)^{th}$ frame and the $(N+3)^{th}$ frame. As described above, the process of writing the first calibration data occurs between the SOF of the $(N+2)^{th}$ frame and the SOF of the $(N+3)^{th}$ frame to avoid affecting more image frames.

Optionally, based on the exposure parameter, the aperture parameter, and the first calibration data, an image corresponding to an $(N+3)^{th}$ frame is displayed within a display duration corresponding to the $(N+3)^{th}$ frame. As described above, from the $(N+3)^{th}$ frame, the exposure parameter matches the aperture parameter, and corresponding compensation may be performed on the image data based on the first calibration data. Therefore, during the display duration corresponding to the $(N+3)^{th}$ frame, the image corresponding to the $(N+3)^{th}$ frame may be transmitted for display.

Optionally, an image corresponding to the $(N+1)^{th}$ frame is displayed within a display duration of the $(N+2)^{th}$ frame. That is, the camera sensor discards the $(N+2)^{th}$ frame when outputting an image. As described above, during the process of writing the first calibration data, the $(N+2)^{th}$ frame is affected. Therefore, when the image is transmitted for display, an image of a previous frame (for example, the image corresponding to the $(N+1)^{th}$ frame) may be displayed to avoid affecting user experience.

Embodiments of this application are applied to a high-dynamic environment or a high-illuminance environment in a preview scene (including photo preview and video preview) where the zoom ratio is greater than a preset zoom ratio (for example, 2x). For example, the scene shown in (4) in FIG. 1A. For another example, the scene shown in (4) in FIG. 1B.

It should be understood that the scene shown in FIG. 1A or the scene shown in FIG. 1B is only an example of descriptions. This is not limited in embodiments of this application.

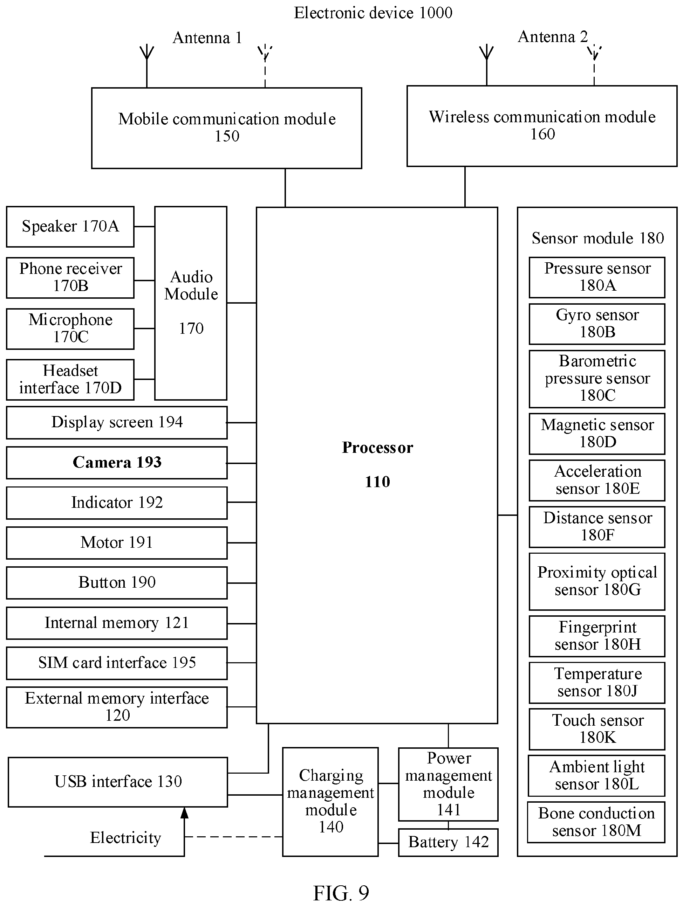

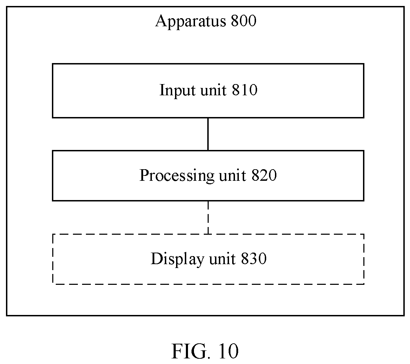

With reference to FIG. 1A to FIG. 8B, the shooting method provided in embodiments of this application are described in detail. Apparatus embodiments of this application are described below with reference to FIG. 9 and FIG. 10. It should be understood that the shooting device in embodiments of this application may perform the shooting method in the foregoing embodiments of this application. That is, for specific working processes of the following products, refer to corresponding processes in the foregoing method embodiments.

FIG. 9 is a schematic structural diagram of an electronic device 1000 applicable to this application.

The electronic device 1000 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset interface 170D, a sensor module 180, a button 190, a motor 191, an indicator 192, a camera 193, a display screen 194, a subscriber identification module (subscriber identification module, SIM) card interface 195, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It should be noted that, the structure shown in FIG. 9 does not constitute a specific limitation on the electronic device 1000. In some other embodiments of this application, the electronic device 1000 may include more or fewer components than those shown in FIG. 9, or the electronic device 1000 may include a combination of some of the components shown in FIG. 9, or the electronic device 1000 may include sub-components of some of the components shown in FIG. 9. The components as shown in FIG. 9 may be implemented by using hardware, software, or a combination of software and hardware.

The processor 110 may include one or more processing units. For example, the processor 110 may include at least one of the following processing units: an application processor (application processor, AP), a modem processor, a graphics processing unit (graphics processing unit, GPU), an image signal processor (image signal processor, ISP), a controller, a video encoder and decoder, a digital signal processor (digital signal processor, DSP), a baseband processor, and a neural-network processing unit (neural-network processing unit, NPU). Different processing units may be independent components or integrated components.

The controller may generate an operation control signal based on instruction operation code and a time sequence signal, and control obtaining and executing of instructions.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. Repeated access is avoided, and waiting time of the processor 110 is reduced, thereby improving system efficiency.

In some embodiments, the processor 110 may include one or more interfaces. For example, the processor 110 may include at least one of the following interfaces: an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, and a USB interface.

A connection relationship among modules shown in FIG. 9 is only schematically explained, which does not constitute limitations on the connection relationship among the modules of the electronic device 1000. Optionally, the modules of the electronic device 1000 may alternatively use a combination of a plurality of connection manners in the foregoing embodiments.

The charging management module 140 is configured to receive power from a charger. The charger may be a wireless charger or a wired charger. In some embodiments of wired charging, the charging management module 140 may receive a current of a wired charger through the USB interface 130. In some embodiments of wireless charging, the charging management module 140 may receive an electromagnetic wave (a current path is shown in dashed lines) through a wireless charging coil of the electronic device 1000. The charging management module 140 may supply power to the electronic device 1000 by using the power management unit 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal storage 121, the display screen 194, the camera 193, the wireless communication module 160, and the like. The power management module 141 may be further configured to monitor parameters such as a battery capacity, a cycle count of a battery, and a battery health state (for example, leakage and impedance). Optionally, the power management module 141 may be provided in the processor 110, or the power management module 141 and the charge management module 140 may be provided in one device.

A wireless communication function of the electronic device 1000 may be implemented by using components such as the antenna 1, the antenna 2, the mobile communication module 150, the wireless communication module 160, the modem processor, and the baseband processor.

The electronic device 1000 may implement a display function by using the GPU, the display screen 194, and the application processor. The GPU is a microprocessor for image processing, and connects the display screen 194 and the application processor. The GPU is configured to perform mathematical and geometric computation, and render an image. The processor 110 may include one or more GPUs that perform program instructions to generate or change display information.

The display screen 194 may be configured to display an image or a video. The display screen 194 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini light-emitting diode (mini light-emitting diode, Mini LED), a micro light-emitting diode (micro light-emitting diode, Micro LED), a micro OLED (Micro OLED), or quantum dot light emitting diodes (quantum dot light emitting diodes, QLED). In some embodiments, the electronic device 1000 may include 1 or N display screens 194, where N is a positive integer greater than 1.

The electronic device 1000 may implement a photographing function by using the ISP, the camera 193, the video codec, the GPU, the display 194, the application processor, and the like.

The ISP is configured to handle data returned by the camera 193. For example, during photographing, a shutter is enabled. Light is transmitted to a photosensitive element of the camera through a lens, and an optical signal is converted into an electrical signal. The photosensitive element of the camera transmits the electrical signal to the ISP for processing, and the electrical signal is converted into an image visible to a naked eye. The ISP may optimize an algorithm for noise, brightness, and complexion of the image, and the ISP may further optimize parameters, such as exposure and color temperature of a photographing scene. In some embodiments, the ISP may be provided in the camera 193.

The camera 193 is configured to capture a still picture or a video. An optical image is generated for an object by using the lens and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP, to convert the electrical signal into a digital image signal. The ISP outputs the digital image signal to the DSP for processing. The DSP converts the digital image signal into an image signal in a standard format of red green blue (red green blue, RGB), YUV, or the like. In some embodiments, the electronic device 1000 may include 1 or N cameras 193, and N is a positive integer greater than 1.

In some embodiments, the electronic device 1000 includes a plurality of apertures, and the plurality of apertures include at least a first aperture. Optionally, the camera 193 of the electronic device 1000 includes the plurality of apertures.

The digital signal processor is configured to process a digital signal, and in addition to a digital image signal, the digital signal processor may further process another digital signal. For example, when the electronic device 1000 selects a frequency, the digital signal processor is configured to perform Fourier transform and the like on frequency energy.

The video encoder and decoder is configured to compress or decompress a digital video. The electronic device 1000 may support one or more video encoders and decoders. In this way, the electronic device 1000 may play or record videos in a plurality of encoding formats, for example, moving picture experts group (moving picture experts group, MPEG) 1, MPEG 2, MPEG 3, and MPEG 4.

The electronic device 1000 may implement an audio function, for example, music playback or recording, by using the audio module 170, the speaker 170A, the phone receiver 170B, the microphone 170C, the headset interface 170D, the application processor, and the like.

The ambient light sensor 180L is configured to perceive an ambient light brightness. The electronic device 1000 may adaptively adjust a brightness of the display screen 194 based on the perceived ambient light brightness. The ambient light sensor 180L may also be configured to automatically adjust white balance during shooting.

In some embodiments, the ambient light sensor 180L may obtain an ambient illuminance of a current shooting environment. When the ambient illuminance is greater than or equal to a first illuminance threshold, the current shooting environment may be considered bright, and may be considered as a high-brightness shooting environment currently.

The touch sensor 180K is also referred to as a touch component. The touch sensor 180K may be disposed on the display screen 194, and the touch sensor 180K and the display screen 194 form a touchscreen, where the touchscreen is also referred to as a touch control screen. The touch sensor 180K is configured to detect a touch operation on or near the touch sensor 180K. The touch sensor 180K may transfer the detected touch operation to the application processor to determine a touch event type. A visual output related to the touch operation may be provided through the display screen 194. In some other embodiments, the touch sensor 180K may alternatively be disposed on a surface of the electronic device 1000, and is located on a position different from that of the display screen 194.

The button 190 includes a power-on key and a volume key. The button 190 may be a mechanical button, or may be a touch button. The electronic device 1000 may receive a key input signal and implement a function related to a case input signal.

The motor 191 may generate a vibration. The motor 191 may be configured to provide an incoming call prompt, and may be further configured to provide touch feedback. The motor 191 may generate different vibration feedback effects for touch operations performed on different applications. The motor 191 may also generate different vibration feedback effects for touch operations performed on different regions of the display 194. Different application scenes (for example, a time reminder, information receiving, an alarm clock, and a game) may correspond to different vibration feedback effects. Customization of a touch vibration feedback effect may also be supported.

In some embodiments, the processor 110 is configured to start a camera sensor at a first moment; obtain an exposure parameter and an aperture parameter of an N$^{th}$ frame at a second moment, where the first moment is before the second moment; deliver the exposure parameter to the camera sensor at a third moment, where the third moment is a moment corresponding to a start-of-frame SOF delimiter of the N$^{th}$ frame, and the second moment is before the third moment; adjust an aperture based on the aperture parameter at a fourth moment by an aperture component, where the fourth moment is a moment corresponding to an end-of-frame EOF delimiter of an (N+1)$^{th}$ frame; and deliver first calibration data to the camera sensor at a fifth moment, where the fifth moment is a moment corresponding to a SOF of an (N+2)$^{th}$ frame.

Optionally, in some embodiments, the processor 110 is further configured to invoke the display screen 194, and display, based on the exposure parameter, the aperture parameter, and the first calibration data, an image corresponding to an (N+3)$^{th}$ frame within a display duration corresponding to the (N+3)$^{th}$ frame.

Optionally, in some embodiments, the processor 110 is further configured to invoke the display screen 194, and display an image corresponding to the (N+1)$^{th}$ frame within a display duration corresponding to the (N+2)$^{th}$ frame.

It may be understood that the shooting method in embodiments of this application may be applied to the electronic device shown in FIG. 9. For specific implementation steps, refer to the descriptions of the foregoing method embodiments. Details are not described herein again.

FIG. 10 is a schematic block diagram of a shooting device 800 according to an embodiment of this application. It should be understood that the device 800 may perform the shooting method shown in FIG. 4 to FIG. 7.

As shown in FIG. 10, the device 800 includes an input unit 810 and a processing unit 820. The device 800 may be an electronic device. Optionally, the device 800 further includes a display unit 830.

In some embodiments, the processing unit 820 is configured to start a camera sensor at a first moment; obtain an exposure parameter and an aperture parameter of an N$^{th}$ frame at a second moment, where the first moment is before the second moment; deliver the exposure parameter to the camera sensor at a third moment, where the third moment is a moment corresponding to a start-of-frame SOF delimiter of the N$^{th}$ frame, and the second moment is before the third moment; adjust an aperture based on the aperture parameter at a fourth moment by an aperture component, where the fourth moment is a moment corresponding to an end-of-frame EOF delimiter of an (N+1)$^{th}$ frame; and deliver first calibration data to the camera sensor at a fifth moment, where the fifth moment is a moment corresponding to a SOF of an (N+2)$^{th}$ frame.

In some embodiments, the processing unit 820 is configured to start the camera sensor, which includes: starting the camera sensor in response to a first operation performed by a user.

Optionally, the input unit 810 is configured to detect the first operation performed by a user.

Optionally, the first operation is an operation of opening a camera application program.

In some embodiments, the processing unit 820 is configured to obtain an exposure parameter and an aperture parameter of an N$^{th}$ frame, which includes:

obtaining the exposure parameter and the aperture parameter in response to a second operation.

Optionally, the second operation is an operation performed by a user to manually adjust the aperture, or the second operation is an operation performed by the electronic device to automatically adjust the aperture.

Optionally, the input unit 810 is configured to detect the operation performed by the user to manually adjust the aperture.

In some embodiments, the display unit 830 is configured to display, based on the exposure parameter, the aperture parameter, and the first calibration data, an image corresponding to an (N+3)$^{th}$ frame within a display duration corresponding to the (N+3)$^{th}$ frame.

In some embodiments, the aperture parameter is configured for instructing the camera sensor to switch from a current aperture to the first aperture.

In some embodiments, the first calibration data is calibration data corresponding to the first aperture.

Optionally, the device 800 includes a plurality of apertures, and the plurality of apertures include at least the first aperture.

In some embodiments, the first calibration data is calibration data obtained by preprocessing second calibration data, where a quantity of bits corresponding to the second calibration data is greater than a quantity of bits corresponding to the first calibration data.

In some embodiments, a transmission duration of the first calibration data is less than a frame interval between the (N+2)$^{th}$ frame and the (N+3)$^{th}$ frame.

In some embodiments, the display unit 830 is further configured to display an image corresponding to the (N+1)$^{th}$ frame within a display duration corresponding to the (N+2)$^{th}$ frame.

In some embodiments, the display unit 830 is further configured to display a first preview interface, where the first preview interface includes a zoom ratio option; and the processing unit 820 is configured to invoke the camera sensor to adopt a full size crop image output mode in response to an operation performed by a user to adjust a zoom ratio to a first zoom ratio based on the zoom ratio option and in response to detecting that a current shooting environment is a high-illuminance environment, where the first preview interface is a photo preview interface or a video preview interface; the first zoom ratio is greater than a preset zoom ratio; and the high-illuminance environment includes that an ambient illuminance of the current shooting environment is greater than a first illuminance threshold.

In some embodiments, the display unit 830 is further configured to display a second preview interface, where the second preview interface includes a zoom ratio option; and the processing unit 820 is configured to invoke the camera sensor to adopt a full size crop image output mode in response to an operation performed by a user to adjust a zoom ratio to a second zoom ratio based on the zoom ratio option and in response to detecting that a current shooting environment is a high-dynamic environment, where the second preview interface is a photo preview interface or a video preview interface; the second zoom ratio is greater than a preset zoom ratio; and the high-dynamic environment includes that a dynamic range value satisfies a dynamic range DR constraint condition.

In an possible example, the input unit 810 and the processing unit 820 may be implemented by using a processor or a processing unit. The display unit 830 may be implemented by using a screen or a display unit. It should be understood that the device 800 is represented in a form of a functional unit. The term "unit" herein may be implemented in a form of software and/or hardware. This is not specifically limited in embodiments of this application.

For example, the "unit" may be a software program, a hardware circuit, or a combination of a software program and a hardware circuit for implementing the foregoing functions. The hardware circuit may include an application specific integrated circuit (application specific integrated circuit, ASIC), an electronic circuit, a processor (for example, a shared processor, a dedicated processor, or a group processor) configured to execute one or more software or firmware programs and a memory, an integrated logic circuit, and/or another suitable component that supports the foregoing functions. In a simple embodiment, a person skilled in the art may figure out that the device 800 may be in a form shown in FIG. 9.

A person of ordinary skill in the art may be aware that, with reference to the examples described in embodiments disclosed in this specification, units and algorithm steps may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but this implementation should not be considered as beyond the scope of this application.

This application further provides a computer program product. When the computer program product is executed by a processor, the method in any method embodiment of this application is implemented.

The computer program product may be stored in a memory, and is finally converted, by performing processing processes such as preprocessing, compiling, assembling, and linking, into an executable target file that can be executed by the processor.

This application further provides a computer-readable storage medium. The computer-readable storage medium stores a computer program. When the computer program is executed by a computer, the method in any method embodiment of this application is implemented. The computer program may be a high-level language program or an executable target program.

The computer-readable storage medium may be a volatile memory or non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It may be clearly understood by a person skilled in the art that, for convenience and brevity of description, for specific working processes and technical effects of the foregoing apparatus and device, refer to corresponding processes and technical effects in the foregoing method embodiments. Details are not described herein again.

In the several embodiments provided in this application, the disclosed system, apparatus, and method may be implemented in other manners. For example, some features of the method embodiments described above may be ignored or not performed. The described apparatus embodiment is merely an example, and unit division is merely logical function division and may be another division in actual implementation. A plurality of units or components may be combined or integrated into another system. In addition, a coupling between units or a coupling between components may be a direct coupling, or may be an indirect coupling. The coupling includes an electrical, mechanical, or another form of connection.

It should be understood that sequence numbers of the processes do not mean execution sequences in various embodiments of this application. The execution sequences of the processes should be determined based on functions and internal logic of the processes, and should not be constituted as any limitation on the implementation processes of embodiments of this application.

In addition, the terms "system" and "network" in this specification may be used interchangeably in this specification. The term "and/or" in this specification is merely an association relationship for describing associated objects, and represents that three relationships may exist. For example, A and/or B may represent the following three cases: Only A exists, both A and B exist, and only B exists. In addition, the character "/" in this specification usually represents an "or" relationship between associated objects.

The terms (or numbers) "first", "second", and the like that appear in embodiments of this application are merely used for the purpose of description, that is, used to distinguish between different objects, for example, different "calibration data", and cannot be understood as an indication or implication of relative importance or an implicit indication of a quantity of indicated technical features. Therefore, a feature defined by "first" or "second" may explicitly or implicitly include one or more features. In the descriptions of embodiments of this application, "at least one (item)" means one or more. "A plurality of" means two or more than two. "At least one (item) of the following items" or a similar expression thereof refers to any combination of these items, including one (item) or any combination of a plurality of (items).

For example, unless otherwise specified, an expression used in embodiments of this application similar to an expression that "an item includes at least one of the following: A, B, and C" usually means that the item may be any one of the following cases: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and other combinations of A, B, and C. In the foregoing descriptions, three elements A, B, and C are used as an example to describe an optional case of the item. When an expression is "the item includes at least one of the following: A, B, ..., and X", that is, more elements are included in the expression, a case to which the item is applicable may also be obtained based on the foregoing rule.

Based on the above, the foregoing descriptions are merely preferred embodiments of the technical solutions of this application, but are not intended to limit the protection scope of this application. Any modification, equivalent replacement, improvement, and the like made within the spirit and principles of this application shall all fall within the protection scope of this application.

**Claims**

1.   A shooting method, applied to an electronic device and comprising:

> starting a camera sensor at a first moment;
> obtaining an exposure parameter and an aperture parameter of an $N^{th}$ frame at a second moment, wherein the first moment is before the second moment;
> delivering the exposure parameter to the camera sensor at a third moment, wherein the third moment is a moment corresponding to a start-of-frame SOF delimiter of the $N^{th}$ frame, and the second moment is before the third moment;
> adjusting an aperture based on the aperture parameter at a fourth moment by an aperture component, wherein the fourth moment is a moment corresponding to an end-of-frame EOF delimiter of an $(N+1)^{th}$ frame; and
> delivering first calibration data to the camera sensor at a fifth moment, wherein the fifth moment is a moment corresponding to a SOF of an $(N+2)^{th}$ frame.

2.   The method according to claim 1, wherein the starting a camera sensor comprises:
starting the camera sensor in response to a first operation performed by a user.

3.   The method according to claim 2, wherein the first operation is an operation of opening a camera application.

4.   The method according to any one of claims 1 to 3, wherein the obtaining an exposure parameter and an aperture parameter of an $N^{th}$ frame comprises:
obtaining the exposure parameter and the aperture parameter in response to a second operation.

5.   The method according to claim 4, wherein the second operation is an operation performed by a user to manually adjust the aperture, or the second operation is an operation performed by the electronic device to automatically adjust the aperture.

6.   The method according to any one of claims 1 to 5, further comprising:
displaying, based on the exposure parameter, the aperture parameter, and the first calibration data, an image corresponding to an $(N+3)^{th}$ frame within a display duration corresponding to the $(N+3)^{th}$ frame.

7.   The method according to any one of claims 1 to 6, wherein the first calibration data is calibration data corresponding to a first aperture.

8. The method according to any one of claims 1 to 7, wherein the aperture parameter is configured for instructing the camera sensor to switch from a current aperture to the first aperture.

9. The method according to any one of claims 1 to 8, wherein the electronic device comprises a plurality of apertures, and the plurality of apertures comprise at least the first aperture.

10. The method according to any one of claims 1 to 9, wherein the first calibration data is calibration data obtained by preprocessing second calibration data, wherein a quantity of bits corresponding to the second calibration data is greater than a quantity of bits corresponding to the first calibration data.

11. The method according to any one of claims 1 to 10, wherein a transmission duration of the first calibration data is less than a frame interval between the $(N+2)^{th}$ frame and the $(N+3)^{th}$ frame.

12. The method according to any one of claims 1 to 11, further comprising:
displaying an image corresponding to the $(N+1)^{th}$ frame within a display duration corresponding to the $(N+2)^{th}$ frame.

13. The method according to any one of claims 1 to 12, wherein after the starting a camera sensor, the method further comprises:

displaying a first preview interface, wherein the first preview interface comprises a zoom ratio option; and adopting, by the camera sensor, a full size crop image output mode in response to an operation performed by a user to adjust a zoom ratio to a first zoom ratio based on the zoom ratio option and in response to detecting that a current shooting environment is a high-illuminance environment, wherein
the first preview interface is a photo preview interface or a video preview interface; the first zoom ratio is greater than a preset zoom ratio; and the high-illuminance environment comprises that an ambient illuminance of the current shooting environment is greater than a first illuminance threshold.

14. The method according to any one of claims 1 to 12, wherein after the starting a camera sensor, the method further comprises:

displaying a second preview interface, wherein the second preview interface comprises a zoom ratio option; and adopting, by the camera sensor, a full size crop image output mode in response to an operation performed by a user to adjust a zoom ratio to a second zoom ratio based on the zoom ratio option and in response to detecting that a current shooting environment is a high-dynamic environment, wherein
the second preview interface is a photo preview interface or a video preview interface; the second zoom ratio is greater than a preset zoom ratio; and the high-dynamic environment comprises that a dynamic range value satisfies a dynamic range DR constraint condition.

15. An electronic device, comprising a processor and a memory, wherein the processor is coupled to the memory, the memory is configured to store a computer program, and when the computer program is executed by the processor, the electronic device is enabled to perform the method according to any one of claims 1 to 14.

16. A computer-readable storage medium, storing a computer program, wherein when the computer program is executed by a processor, an electronic device is enabled to perform the method according to any one of claims 1 to 14.

17. A chip system, applied to an electronic device and comprising one or more processors, wherein the processors are configured to invoke computer instructions, to enable the electronic device to perform the method according to any one of claims 1 to 14.

FIG. 1A

FIG. 1B

| R0 | R1 | Gr0 | Gr1 |
|-----|-----|-----|-----|
| R2 | R3 | Gr2 | Gr3 |
| Gb0 | Gb1 | B0 | B1 |
| Gb2 | Gb3 | B2 | B3 |

FIG. 2A

FIG. 2B

Application
layer

Camera

Gallery

Application
framework layer

Camera access interface

Camera
management

Camera
device

Hardware
abstraction layer

Camera hardware
abstraction layer

Automatic exposure
module

Variable aperture
HAL module

sensor node HAL
module

...

Kernel layer

Variable aperture
driver

Image sensor
driver

Hardware
layer

Variable aperture

sensor

FIG. 3

FIG. 4

EP 4 770 109 A1

Start flowing

Timing for
writing
calibration
data in the
related
technology

| SOF | EOF | | SOF | EOF | SOF | EOF | SOF | EOF | SOF | EOF |

Frame
interval

Vblank

The exposure
parameter
matches the
aperture
parameter

Discard

| 1 | ... | N–1 | | N | N+1 | N+2 | N+3 |

Deliver the
exposure
parameter
and the
aperture
parameter

Write the
calibration
data

Frame interval

T1    T2    T3    T4    T5  T6    T7    T8    T9    T10  T11    T12    T13    T14

T2-1

T2-2

Adjust an
aperture

Frame
interval

User triggers to
switch an aperture

AE determines an
exposure parameter and
an aperture parameter

FIG. 5

Full size
image

Cropped image

## FIG. 6

| Start a camera sensor at a first moment | 701 |

↓

| Obtain an exposure parameter and an aperture parameter of an $N^{th}$ frame at a second moment, where the first moment is before the second moment | 702 |

↓

| Deliver the exposure parameter to the camera sensor at a third moment, where the third moment is a moment corresponding to a start-of-frame SOF delimiter of the $N^{th}$ frame, and the second moment is before the third moment | 703 |

↓

| Adjust, by an aperture component, an aperture based on the aperture parameter at a fourth moment, where the fourth moment is a moment corresponding to an end-of-frame EOF delimiter of an $(N+1)^{th}$ frame | 704 |

↓

| Deliver first calibration data to the camera sensor at a fifth moment, where the fifth moment is a moment corresponding to a SOF of an $(N+2)^{th}$ frame | 705 |

## FIG. 7

FIG. 8A

FIG. 8B

EP 4 770 109 A1

Electronic device 1000

FIG. 9

Apparatus 800

Input unit 810

Processing unit 820

Display unit 830

FIG. 10

## INTERNATIONAL SEARCH REPORT

| International application No. |
|---|
| **PCT/CN2024/111827** |

| A. | CLASSIFICATION OF SUBJECT MATTER |
|---|---|
| | H04N23/62(2023.01)i; H04N5/00(2011.01)i |

According to International Patent Classification (IPC) or to both national classification and IPC

| B. | FIELDS SEARCHED |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT, ENTXTC, ENTXT, DWPI, VEN, CNKI: 光圈, 变化, 标定, 补偿, 调节, 调整, 改变, 更新, 矫正, 可变, 数据, 下发, 校正, 修正, 应用, 帧, SOF, EOF, aperture, variable , update, correction, calibration, adjust, sensor, QSC

| C. | DOCUMENTS CONSIDERED TO BE RELEVANT | |
|---|---|---|
| Category* | Citation of document, with indication, where appropriate, of the relevant passages | Relevant to claim No. |
| A | WO 2023178464 A1 (QUALCOMM INC. et al.) 28 September 2023 (2023-09-28) description, paragraphs 0031-0100, and figures 1-7 | 1-17 |
| A | CN 116320771 A (HONOR DEVICE CO., LTD.) 23 June 2023 (2023-06-23) entire document | 1-17 |
| A | CN 116668866 A (HONOR DEVICE CO., LTD.) 29 August 2023 (2023-08-29) entire document | 1-17 |
| A | CN 116679524 A (VIVO MOBILE COMMUNICATION CO., LTD.) 01 September 2023 (2023-09-01) entire document | 1-17 |
| A | WO 2023035919 A1 (HUAWEI TECHNOLOGIES CO., LTD.) 16 March 2023 (2023-03-16) entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2024** | **25 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111827**

| Patent document cited in search report | | | Publication date (day/month/year) | Patent family member(s) | | | Publication date (day/month/year) |
|---|---|---|---|---|---|---|---|
| WO | 2023178464 | A1 | 28 September 2023 | IN | 202447058494 | A | 09 August 2024 |
| CN | 116320771 | A | 23 June 2023 | None | | | |
| CN | 116668866 | A | 29 August 2023 | None | | | |
| CN | 116679524 | A | 01 September 2023 | None | | | |
| WO | 2023035919 | A1 | 16 March 2023 | EP | 4387251 | A1 | 19 June 2024 |
| | | | | CN | 117652151 | A | 05 March 2024 |

Form PCT/ISA/210 (patent family annex) (July 2022)

**REFERENCES CITED IN THE DESCRIPTION**

**Patent documents cited in the description**

- CN 202311637550X